# EUROPEAN PATENT APPLICATION

(11) **EP 1 515 348 A2**
(43) Date of publication of application: **16.03.2005**
(21) Application number: 04021745.7
(22) Date of filing: 13.09.2004
(51) Int. Cl.: H01F 1/04, H01F 1/06, G11B 5/842, G11B 5/706

(54) **Magnetic particles and method of producing the same and magnetic recording medium**

(30) Priority: 12.09.2003 JP 2003321186; 28.11.2003 JP 2003399430; 05.03.2004 JP 2004062219; 26.03.2004 JP 2004093430; 25.12.2003 JP 2003430200
(71) Applicant: Fuji Photo Film Co., Ltd., Kanagawa (JP)
(72) Inventor: Hattori, Yasushi, Odawara-shi, Kanagawa (JP); Waki, Koukichi, Minami-Ashigara-shi Kanagawa (JP)
(74) Representative: HOFFMANN - EITLE

(57) **Abstract**

Magnetic particles including a ferromagnetic ordered alloy phase, wherein the surface of the magnetic particles is in contact with an organic substance. The invention also provides a method of producing magnetic particles having a ferromagnetic ordered alloy phase, including preparing alloy particles capable of forming the ferromagnetic ordered alloy phase, subjecting the alloy particles to an oxidation treatment, and then annealing the alloy particles in a solvent.A magnetic recording medium including a magnetic layer which contains the magnetic particles described above is also provided.

## Description

### BACKGROUND OF THE INVENTION

### Field of the Invention

The present invention relates to magnetic particles, a method of producing the same and a magnetic recording medium comprising a magnetic layer that contains the magnetic particles.

### Description of the Related Art

A higher magnetic recording density requires smaller sizes of magnetic particles in a magnetic layer. For example, in a widely used magnetic recording medium such as a video tape, a computer tape and a disk, a reduction in the particle size can lead to a reduction in noise, when the mass of the ferromagnetic substance is not changed.

A CuAu- or Cu₃Au-type ferromagnetic ordered alloy as disclosed in Japanese Patent Application Laid-Open (JP-A) No. 2003-73705 is a potential magnetic particle material for improving magnetic recording density. It is known that such a ferromagnetic ordered alloy has large magnetocrystalline anisotropy because of the distortion generated by ordering and thus can show ferromagnetism even when the magnetic particle is reduced in size.

The alloy particle formed of the CuAu- or Cu₃Au-type alloy has a face-centered cubic crystal structure, which generally shows soft magnetism or paramagnetism. However, soft-magnetic or paramagnetic alloy particles are not suitable for recording media. Conventionally, a heat treatment at 500°C or higher has been needed for the production of a ferromagnetic ordered alloy having a coercivity of 95.5 kA/m or more necessary for magnetic recording media. Thus, the industrially applicable support has been limited to inorganic materials.

When such magnetic particles are produced through a liquid phase method, it has been necessary to perform a vapor-phase annealing under a non-oxidative atmosphere such as Ar and N₂ for the purpose of preventing oxidation of the metal components for the magnetic particles when changing the alloy particles into the magnetic particles at the transforming alloy particles into the magnetic particles. According to the inventors' experiment, however, such an annealing process for ordering the alloy phase can sometimes raise the transforming temperature to cause a problem of a heat resistance of a substrate or a problem that the magnetic particles can tend to aggregate with each other and thus can have reduced dispersibility.

### SUMMARY OF THE INVENTION

It is an object of the present invention to provide magnetic particles that show ferromagnetism, can hardly aggregate with each other and can be used regardless of the material for the support, to provide a method of producing such particles and to provide a magnetic recording medium using such magnetic particles and a magnetic recording medium that has a magnetic layer containing magnetic particles that can hardly aggregate with each other, and high productivity and shows ferromagnetism.

As a result of active investigations for solving the problems, the inventors have found that the problems can be solved by the invention as described below.

A first aspect of the invention is to provide magnetic particles, having a CuAu- or Cu₃Au-type ferromagnetic ordered alloy phase, wherein a surface of the magnetic particles is in contact with an organic substance.

A second aspect of the invention is to provide a method of producing magnetic particles having a CuAu- or Cu₃Au-type ferromagnetic ordered alloy phase, comprising: preparing alloy particles capable of forming a CuAu- or Cu₃Au-type ferromagnetic ordered alloy phase; and annealing the alloy particles in a solvent.

A third aspect of the invention is to provide magnetic particles having a CuAu- or Cu₃Au-type ferromagnetic ordered alloy phase, wherein the particles are produced by preparing alloy particles capable of forming a CuAu- or Cu₃Au-type ferromagnetic ordered alloy phase; and annealing the alloy particles in a solvent.

A fourth aspect of the invention is to provide a magnetic recording medium comprising a support and a magnetic layer provided on the support, wherein the magnetic layer contains magnetic particles having a CuAu- or Cu₃Au-type ferromagnetic ordered alloy phase, the surface of the magnetic particles being in contact with an organic substance..

A fifth aspect of the present invention is to provide a magnetic recording medium comprising a support and a magnetic layer which is provided on the support and contains magnetic particles having a CuAu- or Cu₃Au-type ferromagnetic ordered alloy phase, wherein
the magnetic layer is formed by preparing alloy particles capable of forming a CuAu- or Cu₃Au-type ferromagnetic ordered alloy phase, then converting the alloy particles to magnetic particles by means of annealing the alloy particles while contained in a solvent, and applying a coating liquid containing the magnetic particles, a binder, a polar solvent and a nonpolar solvent on the support.

A sixth aspect of the present invention is to provide a magnetic recording medium comprising a support and a magnetic layer which is provided on the support and contains magnetic particles having the CuAu- or Cu₃Au-type ferromagnetic ordered alloy phase, wherein
the magnetic layer further comprises a binder, a polar solvent and a nonpolar solvent.

### DETAILED DESCRIPTION OF THE INVENTION

### Magnetic Particles

Magnetic particles of a first embodiment of the present invention are magnetic particles each having a CuAu- or Cu₃Au-type ferromagnetic ordered alloy phase, the surface of each particle being in contact with an organic substance.

In the magnetic particles of first embodiment of the invention, the surface of each magnetic particle is in contact with the organic substance; in other words, the organic substance exists on the surface of each magnetic particle, and thus the magnetic particles can be prevented from being in direct contact with each other. Thus, they can maintain a highly dispersed state even when used in a magnetic layer of a magnetic recording medium.

Herein, the wording "organic substance" refers to an organic compound mainly composed of the two elements: C and H; the three elements: C, H and O or C, H and N; or the four elements: C, H, O, and N. It differs from inorganic carbides produced after the process of annealing a coating on a support. The method including the steps of annealing the coating on the support or the like and scraping and collecting the produced magnetic particles is complicated in process and has a problem that re-dispersion can be difficult. In contrast, the magnetic particles of the invention already have a dispersed state and thus can be free from the above problem. The contact with the "organic substance" may be confirmed by a method using TEM (Transmission Electron Microscope) and EDAX (Energy Dispersive Analyzer of X-ray) or the like.

The magnetic particles of the first embodiment can be produced by the method as described blow.

Magnetic particles of a second embodiment of the invention are magnetic particles that are produced by the method of the invention as described below and have a CuAu- or Cu₃Au-type ferromagnetic ordered alloy phase. Specifically, the magnetic particles are produced by preparing alloy particles capable of forming a CuAu- or Cu₃Au-type ferromagnetic ordered alloy phase (step of preparing alloy particles) and annealing the alloy particles in a solvent (annealing step). The step of oxidizing the alloy particles may be optionally provided between the alloy particle-preparing step and the annealing step.

The magnetic particles of the second embodiment of the invention are produced through the annealing in a solvent and thus have an organic substance in contact with the surfaces of the magnetic particles. Such an organic substance in contact with the magnetic particle surface can produce the same effect as that of the magnetic particles of the first embodiment.

The annealing in the solvent can produce more uniformly ferro-magnetized particles than the vapor-phase annealing process for producing magnetic particles.

The wording "organic substance" has the same meaning as for the magnetic particles of the first embodiment.

The magnetic particles of the first and second embodiments of the invention preferably contain a third element such as Sb, Pb, Bi, Cu, Ag, Zn and In. The magnetic particles of the first and second embodiments of the invention more preferably contain Cu.

### Method of Producing Magnetic Particles

According to the invention, the method of producing magnetic particles includes of: preparing alloy particles capable of forming the ferromagnetic ordered alloy phase by a liquid phase method or the like (the step of preparing alloy particles) and performing annealing in a solvent (the annealing step) after the preparation of the alloy particles (or after an optional oxidation step).

The inventive method of producing magnetic particles is described below by illustrating each of the steps.

### Step of Preparing Alloy Particles

Alloy particles capable of becoming magnetic particles by the annealing may be produced by a liquid phase method. Any of various known liquid phase methods may be used. Such a liquid phase method may be classified by precipitation technique into (1) an alcohol reduction method using a primary alcohol, (2) a polyol reduction method using a secondary, tertiary, dihydric, or trihydric alcohol, (3) a thermal decomposition method, (4) an ultrasonic decomposition method, and (5) a reduction method with a strong reducing agent; or may be classified by reaction system into (6) a polymer presenting method, (7) a high boiling point solvent method, (8) a normal micellization method, and (9) a reverse micellization method. Any of the reduction methods is preferably used with a modification, and the reverse micellization method, in which particle diameters can easily be controlled, is particularly preferred among the reduction methods.

### Reverse Micellization Method

The reverse micellization method includes at least the steps of (1) mixing two types of reverse micelle solutions so as to cause a reduction reaction (the reduction step) and (2) performing aging at a specific temperature after the reduction reaction (the aging step).

Each step is described below.

### (1) Reduction Step

First, a mixture of a surfactant-containing water-insoluble organic solvent and an aqueous solution of a reducing agent is prepared as a reverse micelle solution (I).

An oil-soluble surfactant may be used as the surfactant. Examples of such a surfactant include sulfonate type surfactants (such as Aerosol OT (trade name, manufactured by Wako Pure Chemical Industries, Ltd.)), quaternary ammonium salt type surfactants (such as cetyltrimethylammonium bromide) and ether type surfactants (such as pentaethylene glycol dodecyl ether).

The content of the surfactant in the water-insoluble organic solvent is preferably from 20 to 200 g/l.

The water-insoluble organic solvent for dissolving the surfactant is preferably an alkane, an ether, alcohol or the like.

The alkane is preferably of 7 to 12 carbon atoms. Examples of such an alkane include heptane, octane, isooctane, nonane, decane, undecane, and dodecane.

The ether is preferably diethyl ether, dipropyl ether, dibutyl ether, or the like.

The alcohol is preferably ethoxyethanol, ethocxypropanol or the like.

One or more of alcohols, polyols, H₂, and compounds having HCHO, S₂O₆²⁻, H₂PO₂⁻, BH₄⁻, N₂H₅⁺, H₂PO₃⁻, or the like may preferably be used alone or in combination as the reducing agent in the aqueous solution.

The amount of the reducing agent in the aqueous solution is preferably from 3 to 50 moles per mole with respect to one mole of the metal salt.

In this process, the mass ratio of water to the surfactant in the reverse micelle solution (I) (water/surfactant) is preferably 20 or less. If such a mass ratio is 20 or less, advantageously, precipitation can be suppressed, and the particles can easily be uniform. The mass ratio is preferably 15 or less, more preferably from 0.5 to 10. In addition to the reverse micelle solution (I), any other reverse micelle solution (I'), (I") or the like may be prepared with variations in the mass ratio or the material for use, and may be used in combination.

Another mixture of a surfactant-containing water-insoluble organic solvent and an aqueous solution of a metal salt is independently prepared as a reverse micelle solution (II).

The conditions of the surfactant and the water-insoluble organic solvent (such as materials for use and concentration) may be the same as those of the reverse micelle solution (I).

The type of the reverse micelle solution (II) for use may be the same as or different from that of the reverse micelle solution (I). Similarly, the mass ratio of water to the surfactant in the reverse micelle solution (II) may be the same as or different from that of the micelle solution (I). In addition to the reverse micelle solution (II), any other micelle solution (II'), (II") or the like may be prepared with variations in the mass ratio or the material for use, and may be used in combination.

It is preferred that the metal salt for forming the aqueous solution should be appropriately selected in such a manner that the magnetic particles can form the CuAu- or Cu₃Au-type ferromagnetic ordered alloy. In the present invention, the CuAu-type ferromagnetic ordered alloy is more prefered.

Examples of the CuAu-type ferromagnetic ordered alloy include FeNi, FePd, FePt, CoPt, and CoAu. Particularly preferred are FePd, FePt and CoPt.

Examples of the Cu₃Au-type ferromagnetic ordered alloy include Ni₃Fe, FePd₃, Fe₃Pt, FePt₃, CoPt₃, Ni₃Pt, CrPt₃, and Ni₃Mn. Particularly preferred are FePd₃, FePt₃, CoPt₃, Fe₃Pd, Fe₃Pt, and Co₃Pt.

Examples of the metal salt include H₂PtCl₆, K₂PtCl₄, Pt(CH₃COCHCOCH₃)₂, Na₂PdCl₄, Pd(OCOCH₃)₂, PdCl₂, Pd(CH₃COCHCOCH₃)₂, HAuCl₄, Fe₂(SO₄)₃, Fe(NO₃)₃, (NH₄)₃Fe(C₂O₄)₃, Fe(CH₃COCHCOCH₃)₃, NiSO₄, CoCl₂, and Co(OCOCH₃)₂.

The concentration of the aqueous metal salt solution is preferably from 0.1 to 1000 µmol/ml, more preferably from 1 to 100 µmol/ml (in terms of the content of the metal salt).

The alloy phase of the alloy particles should be transformed from the disordered phase to the ordered phase by the annealing in the solvent as described below. A third element such as Cu, Ag, Sb, Pb, Bi, Zn, and In is preferably added to the above binary alloy for the purpose of lowering the transforming temperature. A precursor of each third element is preferably added to the metal salt solution in advance. The third element is preferably added in an amount of 1 to 30 at%, more preferably of 5 to 25 at%, based on the amount of the binary alloy.

The reverse micelle solutions (I) and (II) prepared as shown above are mixed. Any mixing method may be used. For example, a preferred method includes adding the reverse micelle solution (II) to form a mixture while stirring the reverse micelle solution (I), in consideration of uniformity in reduction. After the mixing is completed, a reduction reaction is allowed to proceed, in which the temperature is preferably kept constant in the range from -5 to 30°C.

When the reduction temperature is from -5 to 30°C, the problem of unevenness in reduction reaction by condensation of the aqueous phase can be eliminated, and the problem of easily causing aggregation or precipitation and making the system unstable can also be eliminated. The reduction temperature is preferably from 0 to 25°C, more preferably from 5 to 25°C.

Herein, the "constant temperature" means that when the target temperature is set at T (°C), the temperature of the reduction reaction is in the range of T ± 3°C. Even in such a case, T also should have upper and lower limits in the above reduction temperature range (from -5 to 30°C).

The time period of the reduction reaction should be appropriately set depending on the amount of the reverse micelle solution and the like, and is preferably from 1 to 30 minutes, more preferably from 5 to 20 minutes.

The reduction reaction has a significant effect on monodispersion of the particle size distribution and thus is preferably performed with high speed stirring.

A stirrer with high shearing force is preferably used. Specifically, such a preferred stirrer comprises: an agitating blade basically having a turbine or puddle type structure; a structure of a sharp blade attached to the end of the agitating blade or placed at the position in contact with the agitating blade; and a motor for rotating the agitating blade. Useful examples thereof include Dissolver (trade name, manufactured by TOKUSHU KIKA KOGYO CO., LTD.), Omni-Mixer (trade name, manufactured by Yamato Scientific Co., Ltd.), and a homogenizer (trade name, manufactured by SMT Company). A stable dispersion of monodisperse alloy particles can be prepared using any of these stirrers.

In the above stirrer, the number of revolutions is preferably from 2000 to 20000 rpm.

After the reaction of the reverse micelle solutions (I) and (II), at least one dispersing agent having one to three amino or carboxyl groups is preferably added in an amount of 0.001 to 10 moles per mole of the alloy particles to be prepared.

If such a dispersing agent is added, more monodisperse aggregation-free alloy particles can be produced. When the addition amount is from 0.001 to 10 moles, the monodispersion of the alloy particles can further be improved while aggregation can be suppressed.

The dispersing agent is preferably an organic compound having a group capable of adsorbing to the alloy particle surface. Examples thereof include those having one to three amino, carboxyl, sulfonic acid, or sulfinic acid groups. One or more of those compounds may be used alone or in combination.

Specific examples of the dispersing agent include the compounds represented by the structural formula: R-NH₂, NH₂-R-NH₂, NH₂-R(NH₂)-NH₂, R-COOH, COOH-R-COOH, COOH-R(COOH)-COOH, R-SO₃H, SO₃H-R-SO₃H, SO₃H-R(SO₃H)-SO₃H, R-SO₂H, SO₂H-R-SO₂H, or SO₂H-R(SO₂H)-SO₂H. In each formula, R is a straight chain, branched or cyclic, saturated or unsaturated hydrocarbon.

A particularly preferred dispersing agent is oleic acid, which is a known surfactant for colloid stabilization and has been used to protect particles of a metal such as iron. The relatively long chain of oleic acid can provide significant steric hindrance so as to cancel the strong magnetic interaction between particles. For example, oleic acid has an 18-carbon atom chain and a length of 20 angstroms (2 nm) or less. Oleic acid is not aliphatic but has a double bond.

A similar long-chain carboxylic acid such as erucic acid and linolic acid may also be used as well as oleic acid. One or more of the long-chain organic acids having 8 to 22 carbon atoms may be used alone or in combination. Oleic acid is preferred because it is inexpensive and easily available from natural sources such as olive oil. Oleylamine, a derivative of oleic acid, is also a useful dispersing agent as well as oleic acid.

In a preferred mode of the above reduction step, a metal with a lower redox potential (hereinafter also simply referred to as "low-potential metal") such as Co, Fe, Ni, and Cr (a metal with a potential of about -0.2 V (vs. N.H.E)) or less is reduced in the CuAu- or Cu₃Au-type ferromagnetic ordered alloy phase and precipitated in a minimal size and in a monodisperse state. Thereafter, in a preferred mode of the temperature rise stage and the aging step as described below, a metal with a high redox potential (hereinafter also simply referred to as "high-potential metal") such as Pt, Pd and Rh (a metal with a potential of about -0.2 V (vs. N.H.E)) or less is reduced by the precipitated low-potential metal, which serves as a core, at its surface, and replaced and precipitated. The ionized low-potential metal can be reduced again by the reducing agent and precipitated. Such cycles produce alloy particles capable of forming the CuAu- or Cu₃Au-type ferromagnetic ordered alloy.

### (2) Aging Step

After the reduction reaction is completed, the resulting solution is heated to an aging temperature.

The aging temperature is preferably a constant temperature of 30 to 90°C. Such a temperature should be higher than the temperature of the reduction reaction. The aging time period is preferably from 5 to 180 minutes. If the aging temperature and the aging time are each in the above range, aggregation or precipitation can be prevented, and a change in composition can be prevented, which would otherwise be caused by an incomplete reaction. The aging temperature and the aging time are preferably from 40 to 80°C and from 10 to 150 minutes, respectively, more preferably from 40 to 70°C and from 20 to 120 minutes, respectively.

Herein, the "constant temperature" has the same meaning as in the case of the reduction temperature (provided that the phrase "reduction temperature" is replaced by the phrase "aging temperature"). Particularly in the above range (from 30 to 90°C), the aging temperature is preferably 5°C or more, more preferably 10°C or more higher than the reduction reaction temperature. If the aging temperature is 5°C or more higher than the reduction temperature, the composition as prescribed can be easy to obtain.

In the aging step as shown above, the high-potential metal is deposited on the low-potential metal which is reduced and precipitated in the reduction step.

Specifically, the reduction of the high-potential metal occurs only on the low-potential metal, and the high-potential metal and the low-potential metal are prevented from precipitating separately. Thus, the alloy particles capable of forming the CuAu- or Cu₃Au-type ferromagnetic ordered alloy can be efficiently prepared in high yield and in the composition ratio as prescribed so that they can be controlled to have the desired composition.

The alloy particle which has desired particle diameter is obtained where the temperature and stirring speed at the aging are controlled suitably.

After the aging is performed, a washing and dispersing process is preferably performed, which includes the steps of: washing the resulting solution with a mixture solution of water and a primary alcohol; then performing a precipitation treatment with a primary alcohol to produce a precipitate; and dispersing the precipitate in an organic solvent.

Such a washing and dispersing process can remove impurities so that the applicability of the coating for forming the magnetic layer of the magnetic recording medium can further be improved.

The washing step and the dispersing step should each be performed at least once, preferably twice or more.

Any primary alcohol may be used in the washing, and methanol, ethanol or the like is preferred. The mixing ratio (water/primary alcohol) by volume is preferably in the range from 10/ 1 to 2/1, more preferably from 5 / 1 to 3/1. If the ratio of water is too high, the surfactant can be resistant to being removed. If the ratio of the primary alcohol is too high, on the other hand, aggregation may occur.

Thus, a dispersion that comprises the alloy particles dispersed in the solution (an alloy particle-containing liquid) is obtained. The alloy particles are monodispersed and thus can be prevented from aggregating and can maintain a uniformly dispersed state even when applied to a support. The respective alloy particles can be prevented from aggregating even when annealed, and thus they can efficiently be ferro-magnetized and have good suitability for coating.

### Reduction Method

To except for the reverse micelle, the alloy particles may be prepared by general reduction methods. There are various reduction methods for producing the alloy particles capable of forming the CuAu- or Cu₃Au-type ferromagnetic ordered alloy. It is preferred to use a method including the step of reducing at least a metal with a lower redox potential and a metal with a high redox potential with a reducing agent or the like in an organic solvent, water or a mixture solution of an organic solvent and water.

The low-potential metal and the high-potential metal may be reduced in any order or may be reduced at the same time.

An alcohol, a polyalcohol or the like may be used as the organic solvent. Examples of the alcohol include methanol, ethanol and butanol. Examples of the polyalcohol include ethylene glycol and glycerol.

Examples of the CuAu- or Cu₃Au-type ferromagnetic ordered alloy are the same as those in the case of the above reverse micellization method.

The method of preparing the alloy particles through first-precipitation of the high-potential metal may employ the process disclosed on paragraphs 18 to 30 of JP-A No. 2003-73705.

The metal with a high redox potential is preferably Pt, Pd, Rh, or the like. Such a metal may be used by dissolving H₂PtCl₆·6H₂O, Pt(CH₃COCHCOCH₃)₂, RhCl₃·3H₂O, Pd(OCOCH₃)₂, PdCl₂, Pd(CH₃COCHCOCH₃)₂, or the like in a solvent. The concentration of the metal in the solution is preferably from 0.1 to 1000 µmol/ml, more preferably from 0.1 to 100 µmol/ml.

The metal with a lower redox potential is preferably Co, Fe, Ni, or Cr, particularly preferably Fe or Co. Such a metal may be used by dissolving FeSO₄·7H₂O, NiSO₄·7H₂O, CoCl₂·6H₂O, Co(OCOCH₃)₂·4H₂O, or the like in a solvent. The concentration of the metal in the solution is preferably from 0.1 to 1000 µmol/ ml, more preferably from 0.1 to 100 µmol/ml.

Similarly to the above reverse micellization method, a third element is preferably added to the binary alloy to lower the transforming temperature for the ferromagnetic ordered alloy. The addition amount may be the same as that in the reverse micellization method.

For example, the low-potential metal and the high-potential metal are reduced and precipitated in this order using a reducing agent. In such a case, a preferred process includes reducing the low-potential metal or the low-potential metal and part of the high-potential metal with a reducing agent having a reduction potential lower than -0.2 V (vs. N.H.E); adding the product of the reduction to the high-potential metal source and reducing it with a reducing agent having a redox potential higher than -0.2 V (vs. N.H.E); and then performing a reduction with a reducing agent having a reduction potential lower than -0.2 V (vs. N.H.E).

The redox potential depends on the pH of the system. Preferable examples of the reducing agent having a redox potential higher than -0.2 V (vs. N.H.E) include alcohols such as 1,2-hexadecanediol, glycerins; H₂, and HCHO.

Preferable examples of the reducing agent having a potential lower than -0.2 V (vs. N.H.E) include S₂O₆²⁻, H₂PO₂⁻, BH₄⁻, N₂H₅⁺, and H₂PO₃⁻.

In a case where a zero-valence metal compound such as Fe carbonyl is used as the raw material for the low-potential metal, the reducing agent for the low-potential metal does not have to be used.

The high-potential metal may be reduced and precipitated in the presence of an adsorbent so that the alloy particles can be stably prepared. The adsorbent is preferably a polymer or a surfactant.

Examples of the type of the polymer include polyvinyl alcohol (PVA), poly(N-vinyl-2- pyrolidone) (PVP) and gelatin. PVP is preferred.

The molecular weight of the polymer is preferably from 20,000 to 60,000, more preferably from 30,000 to 50,000. The amount of the polymer is preferably from 0.1 to 10 times, more preferably from 0.1 to 5 times the mass of the alloy particle product.

The adsorbent preferably includes an "organic stabilizing agent" which is a long-chain organic compound represented by the general formula: R-X, wherein R is a "tail group" of a linear or branched hydrocarbon or fluorocarbon chain and generally has 8 to 22 carbon atoms; and X is a "head group" which is a part for providing a specific chemical bond to the alloy particle surface and preferably any one of sulfinate (-SOOH), sulfonate (-SO₂OH), phosphinate (-POOH), phosphonate (-OPO(OH)₂), carboxylate, and thiol.

The organic stabilizing agent is preferably any one of a sulfonic acid (R-SO₂OH), a sulfinic acid (R-SOOH), a phosphinic acid (R₂POOH), a phosphonic acid (R-OPO(OH)₂), a carboxylic acid (R-COOH), and a thiol (R-SH). Oleic acid is particularly preferred as in the reverse micellization method.

A combination of the phosphine and the organic stabilizing agent (such as triorganophosphine/acid) can provide good controllability for the growth and stabilization of the particles. Didecyl ether or didodecyl ether may also be used. Phenyl ether or n-octyl ether is preferably used as the solvent in terms of low cost and high boiling point.

The reduction is preferably performed at a temperature in the range from 80 to 360°C, more preferably from 80 to 240°C, depending on the necessary alloy particles and the boiling point of the necessary solvent. If the temperature is in such a range, well controllable growth of particles can be facilitated, and the formation of undesired byproducts can be inhibited.

The particle diameter of the alloy particles is preferably 1 to 100 nm, more preferably 3 to 20 nm, and still more preferably 3 to 10 nm, as in the case of alloy particles prepared by the reverse micellization method.

A seed crystal method is effective in increasing the particle diameter. For use in magnetic recording media, the alloy particles are preferably closest packed in order to increase the recording capacity, and therefore, the standard deviation of the diameter of the alloy particles is preferably less than 10%, more preferably 5% or less. Alloy particle-containing solutions are prepared by the reduction method above.

In the seed crystal method, the particles might be oxidized, and thus the particles should preferably be subjected to a hydrogenation treatment in advance.

Removing salts from the solution after the alloy particle synthesis is preferred in terms of improving the dispersion stability of the alloy particles. The desalting method may include the steps of adding an excess of an alcohol to cause slight aggregation, precipitating the particles naturally or by centrifugation and removing the salts together with the supernatant. Since aggregation can easily occur in a general reduction method, ultrafiltration is preferably used. Thus, the alloy particles dispersed in solution (an alloy particle-containing liquid) is obtained.

It is not favorable if the particle size is too fine, as the particles become superparamagnetic. As described above, use of the seed crystal method is preferable for increasing particle size. In such a method, high-potential metals sometimes precipitate more easily than other metal components of the particles. As there is concern about the oxidation of particles during precipitation, the particles are preferably subjected to a hydrogenation treatment in advance.

The outermost layer of the alloy particles prepared by liquid phase method is preferably covered with a high-potential metal for prevention of oxidation, but such alloy particles aggregate easily. Therefore, the outermost layer of the alloy particles is preferably covered with an alloy of high- and low-potential metals. The structure may be constructed easily and efficiently by the liquid phase method described above.

A transmission electron microscope (TEM) may be used for evaluation of the diameter of alloy particles. The crystal system of alloy or magnetic particles may be determined by TEM electron diffraction, but is preferably determined by X-ray diffraction in terms of high accuracy. In the composition analysis of the internal portion of alloy or magnetic particles, an EDAX is preferably attached to an FE-TEM capable of finely focusing the electron beam and used for the evaluation. The evaluation of the magnetic properties of the magnetic particles may be made using a VSM (vibrating sample magnetometer).

### Oxidation Treatment Step

The oxidation treatment step is optionally provided between the alloy particle-preparing step and the annealing step. In the oxidation treatment step, the alloy particles are oxidized. If the prepared alloy particles are oxidized, magnetic particles with ferromagnetism can efficiently be produced with no need for high temperature in the later annealing in the solvent. This can result from the phenomenon as shown below.

In the oxidation of the alloy particles, first, oxygen comes onto their crystal lattice. When the oxygen-containing alloy particles are annealed in a reducing atmosphere, the oxygen is desorbed from the crystal lattice by heat. Such desorption of the oxygen can cause defects, through which the metal atom component of the alloy can easily move so that the phase transformation can easily occur even at relatively low temperature.

For example, such a phenomenon can be estimated by EXAFS (Extended X-ray Absorption Fine Structure) measurement of the oxidized alloy particles and the annealed magnetic particles.

In unoxidized Fe-Pt alloy particles, for example, the existence of a bond between the Fe atom and the Pt or Fe atom can be confirmed.

In the oxidized alloy particles, the existence of a bond between the Fe atom and the oxygen atom can be confirmed, while a bond between Pt and Fe atoms can hardly be found. This means that the Fe-Pt or Fe-Fe bond should be broken by the oxygen atom. This suggests that the Pt or Fe atom can easily move at the time of annealing.

After the alloy particles are annealed, the existence of oxygen cannot be confirmed while the existence of a bond with the Pt or Fe atom can be confirmed around the Fe atom.

It is apparent from the above phenomenon that the phase transformation can slowly proceed without oxidation and that the annealing can require higher temperature without oxidation. It can be considered, however, that excessive oxidation can cause a too strong interaction between oxygen and the easy-to-oxidize metal such as Fe so that metal oxides can be produced.

Thus, it is important that the oxidation state of the alloy particles should be controlled. Therefore, the oxidation treatment conditions should be optimized.

When the alloy particles are produced by the liquid phase method or the like as described above, for example, the oxidation treatment may be performed by supplying a gas containing at least oxygen (such as oxygen gas and air) to the resulting alloy particle-containing liquid.

At that time, the partial pressure of the oxygen is preferably from 10 to 100%, more preferably from 15 to 50% of the total pressure.

The temperature of the oxidation treatment is preferably from 0 to 250°C, more preferably from 0 to 100°C, still preferably from 15 to 80°C.

The oxidation treatment may be performed by stirring a dispersion liquid containing particles under the oxygen existence as air and supplying the gas into liquid (bubbling).

The oxidation state of the alloy particles is preferably evaluated by EXAFS or the like. In view of the cleavage of the Fe-Fe or Pt-Fe bond by oxygen, the number of the bond or bonds between oxygen and the low-potential metal such as Fe is preferably from 0.5 to 4, more preferably from 1 to 3.

### Annealing Step

After performing step of the preparing alloy particles, the oxidized alloy particles are in a disordered phase. Ferromagnetism cannot be produced in the disordered phase as described above. Thus, heat treatment (annealing) should be performed to produce the ordered phase. In the invention, the annealing is performed in a solvent, because such a process can produce particles in a dispersed state and can apply without performing a reverse dispersion. The annealing is preferably performed under the conditions of 150 to 350°C and 1 to 50 MPa, more preferably of 200 to 350°C and 3 to 40 MPa, still more preferably of 200 to 350°C and 5 to 30 MPa.

If the annealing is performed under the conditions of 150 to 350°C and 1 to 50 MPa, the process of forming the ordered phase in the solvent can further be promoted so that ferromagnetism (especially hard magnetism) can be produced. Time of the annealing is preferably for 30 minutes to 6 hours, more preferably 1 to 4 hours.

The organic solvent for use is preferably a non-oxidative solvent, particularly preferably a reducing solvent. Preferable examples thereof include ethanolamines and octylamines, and triethanolamine and trioctylamine are more preferred. Moreover, preferable examples thereof includes polyole such as ethylene glycol, propylene glycol, diethylene glycol, triethylene glycol or the like.

In this case, the amount of the organic solvent is preferably from 100 to 1000 ml per 1 mg of the alloy particles, and reflux treatment is preferably performed with 200 to 500 ml of the organic solvent.

Alternatively, a mixed solvent of an alkane and an alcohol is preferably used in the annealing according to the invention. Specific examples of the alkane include alkanes of 6 to 14 carbon atoms such as hexane, heptane, octane, isooctane, nonane, decane, undecane, dodecane, tridecane, and tetradecane. Examples of the alcohol include ethyl alcohol, butyl alcohol, hexyl alcohol, octyl alcohol, 1,2-ethanediol, 1,4-butanediol, 1,6-hexanediol, and 1,2-hexanediol.

The amount of the solvent is preferably from 10 to 10000 ml, more preferably from 100 to 1000 ml per 1 g of the alloy particles. The volume ratio of the alkane to the alcohol is preferably from 1/9 to 9/1.

A dispersing agent is preferably allowed to coexist in the organic solvent at the time of the annealing. Such a dispersing agent may preferably be the same as used in the alloy particle-preparing step.

The phase of the alloy particles is transformed from the disordered phase to the ordered phase by the annealing as shown above, so that magnetic particles with ferromagnetism are produced.

In view of noise reduction, it is preferred that the magnetic particles with the alloy phase have a small diameter. If the particle diameter is too small, however, the particles can be superparamagnetic after annealing and thus can be unsuitable for magnetic recording. According the invention, the alloy particles preferably have a number average particle diameter of 1 to 30 nm, more preferably of 2 to 20 nm, still more preferably of 3 to 10 nm.

If the number average particle diameter is from 1 to 30 nm, a low-noise ferromagnetic recording medium can be produced.

The number average particle diameter may be determined through the actual measurement of the particles in a photograph taken with a transmission electron microscope (TEM).

For use in the magnetic recording medium, the magnetic particles having the alloy phase are preferably closest packed in order to provide a high storage capacity. Therefore, the standard deviation of the particle diameters of the magnetic particles is preferably 20% or less, more preferably 10% or less.

A transmission electron microscope (TEM) may be used for the evaluation of the diameters of the magnetic particles having the alloy phase. The crystal system of the magnetic particles may be determined by TEM electron diffraction, preferably by X-ray diffraction in terms of high accuracy. In the composition analysis on each component of the magnetic particles, an EDAX is preferably attached to an FE-TEM capable of finely focusing the electron beam and used for the evaluation. The evaluation of the magnetic properties of the magnetic particles may be made using a VSM (vibrating sample magnetometer).

The magnetic particles produced by the manufacturing method of the invention preferably have a coercivity of 95.5 to 955 kA/m (1200 to 12000 Oe). When they are applied to magnetic recording media, they preferably have a coercivity of 159 to 478 kA/m (2000 to 6000 Oe) in view of the response capability of a recording head.

In addition, the magnetic particles described above, an organic substance being connected onto the surface of each magnetic particle, i.e., an organic substance being present on the surface of each magnetic particle, do not become in contact directly with each other. Accordingly, the magnetic particles are less likely to aggregate than the magnetic particles prepared by subjecting to an annealing treatment after they are coated on a support, and can retain a favorable high-dispersion state even when the magnetic particles are used for the magnetic layer of magnetic recording media.

### Magnetic Recording Medium

The magnetic recording medium of the invention comprises a support and a magnetic layer that is provided on the support and contains magnetic particles having the CuAu- or Cu₃Au-type ferromagnetic ordered alloy phase.

The magnetic recording medium of the invention is characterized in that the magnetic layer formed on the support contains the magnetic particles of the invention.

As described above, the magnetic particles of the invention can be produced in a alloy particle-preparing step of preparing alloy particles capable of forming a CuAu- or Cu₃Au-type ferromagnetic ordered alloy phase (hereinafter, referred to simply as "ferromagnetic ordered alloy phase") and in a subsequent annealing step of annealing the alloy particles in a solvent (organic solvent). Further, the magnetic recording medium of the invention can be produced by preparing a coating liquid by adding a binder, a polar solvent, and a nonpolar solvent to a solution containing the magnetic particles and thus forming a magnetic layer by means of coating the coating liquid onto a support (coating step).

The magnetic recording medium may be a magnetic tape such as a video tape and a computer tape; a magnetic disk such as a floppy (R) disk and a hard disk; or the like.

After the annealing, the magnetic particles are present in a dispersed state in the organic solvent. When these magnetic particles are used to form the magnetic layer, a binder should be added to the magnetic particle-containing liquid after the annealing in order to form a coating. A binder such as a urethane resin, however, cannot be dissolved without a polar solvent. Thus, it is proposed that a polar solvent should be added to the magnetic particle-containing liquid so as to dissolve the binder. However, the addition of the polar solvent can cause the magnetic particles to aggregate and thus should be followed by mechanical re-dispersion. Since the magnetic particles are extremely small in diameter, such mechanical re-dispersion cannot provide sufficient dispersion properties.

The above phenomenon is also apparent from the inventors' experiment below. For example, when the magnetic particle-containing liquid (with 20% by mass of the magnetic particles) is mixed with a nonpolar solvent (toluene) so that the content of the magnetic particles is reduced to 10% by mass, the magnetic particles maintain a good dispersion state. In contrast, when the magnetic particle-containing liquid (with 20% by mass of the magnetic particles) is mixed with a polar solvent (cyclohexanone) so that the content of the magnetic particles is reduced to 10% by mass, the magnetic particles are found aggregating slightly.

On the other hand, when a binder (a urethane resin) is added to each solution after the mixing, the binder is not dissolved in the nonpolar solvent-containing solution but found being dissolved in the polar solvent-containing solution.

Thus, according to the invention, a nonpolar solvent is added to the magnetic particle-containing liquid, and then a polar solvent and a binder are added to form a coating liquid. It is believed that the addition of the nonpolar solvent can cause the effect of reducing a disturbance of particle stability, which would otherwise be caused by the charge of the polar solvent, so that the magnetic particles can be prevented from aggregating.

The nonpolar solvent is added to prevent the magnetic particle aggregation. Thus, it is preferred that prior to the polar solvent, the nonpolar solvent should be added to the magnetic particle-containing liquid. Alternatively, a mixture of the nonpolar solvent and the polar solvent or a mixture of the nonpolar solvent, the polar solvent and the binder may be added to the magnetic particle-containing liquid.

The nonpolar solvent is preferably at least one of an aromatic hydrocarbon such as toluene, benzene and xylene; and octane, decane, hexane, nonane, and the like. Before the coating liquid is completed, the nonpolar solvent is preferably added in an amount of 20 to 95% by mass, more preferably of 30 to 85% by mass.

The polar solvent is preferably at least one of a ketone such as acetone, methyl ethyl ketone and methyl isobutyl ketone; an alcohol such as methanol, ethanol and propanol; an ester such as methyl acetate, butyl acetate and isobutyl acetate; a glycol ether solvent such as glycol dimethyl ether and glycol monoethyl ether; and cyclohexanone.

Before the coating liquid is completed, the polar solvent is preferably added in an amount of 20 to 95% by mass, more preferably of 30 to 85% by mass.

In terms of satisfying both the solubility of the binder and the prevention of the magnetic particle aggregation, the mass ratio of the polar solvent to the nonpolar solvent (polar solvent/nonpolar solvent) is preferably from 1/9 to 9/1, more preferably from 2 / 8 to 8/2.

The binder may be a known thermoplastic resin, a known thermosetting resin or a known reactive resin or any combination thereof.

In a preferred mode, the thermoplastic resin has a glass transition temperature of -100 to 150°C, a number average molecular weight of 1,000 to 200,000 (more preferably of 10,000 to 100,000) and a polymerization degree of about 50 to 1000.

Examples of such a thermoplastic resin include polymers or copolymers comprising a monomer unit of vinyl chloride, vinyl acetate, vinyl alcohol, maleic acid, acrylic acid, an acrylate ester, vinylidene chloride, acrylonitrile, methacrylic acid, a methacrylate ester, styrene, butadiene, ethylene, vinyl butyral, vinyl acetal, a vinyl ether, or the like; and polyurethane resins and various rubber resins.

Examples of the thermosetting resin and the reactive resin include phenol resins, epoxy resins, curable polyurethane resins, urea resins, melamine resins, alkyd resins, reactive acrylic resins, formaldehyde resins, silicone resins, epoxy-polyamide resins, a mixture of a polyester resin and an isocyanate pre-polymer, a mixture of a polyester polyol and a polyisocyanate, and a mixture of polyurethane and polyisocyanate.

These resins are described in detail in the text "Plastic Handbook," published by Asakura Publishing Company Ltd. Any known electron beam-curable resin may also be used for each layer. Examples of such a resin and a method of producing the same are described in detail in JP-A No. 62-256219.

One or more of the above resins may be used alone or in combination. A preferable example thereof is polyurethane by itself; a combination of a polyurethane resin and at least one selected from a vinyl chloride resin, a vinyl chloride-vinyl acetate copolymer, a vinyl chloride-vinyl acetate-vinyl alcohol copolymer, and a vinyl chloride-vinyl acetate-maleic anhydride copolymer; or a combination of any of the above copolymers and polyisocyanate.

The structure of the polyurethane resin may comprise polyester-polyurethane, polyether-polyurethane, polyether-polyester-polyurethane, polycarbonate-polyurethane, polyester-polycarbonate-polyurethane, polycaprolactone-polyurethane, or the like.

In order to have better dispersibility and durability, any of the above binders may preferably have at least one polar group selected from -COOM, -SO₃M, -OSO₃M, -P = O(OM)₂, -O-P = O(OM)₂ (wherein M represents a hydrogen atom or an alkali metal base), OH, NR₂, N⁺R₃ (wherein R represents a hydrocarbon group), an epoxy group, SH, and CN, wherein the polar group is introduced by copolymerization or addition reaction. As a result of examination, -SO₃M is particularly preferred. The amount of such a polar group is preferably from 10⁻⁸ to 10⁻¹ mol/g, more preferably from 10⁻⁶ to 10⁻² mol/ g.

Specific examples (by product name) of the binder for use in the invention include VAGH, VYHH, VMCH, VAGF, VAGD, VROH, VYES, VYNC, VMCC, XYHL, XYSG, PKHH, PKHJ, PKHC, and PKFE (each manufactured by Union Carbide Corporation), MPR-TA, MPR-TA5, MPR-TAL, MPR-TSN, MPR-TMF, MPR-TS, MPR-TM, and MPR-TAO (each manufactured by Nisshin Chemical Industry Co., Ltd.), 1000W, DX80, DX81, DX82, DX83, and 100FD (each manufactured by DENKI KAGAKU KOGYO KABUSHIKI KAISHA), MR-104, MR-105, MR110, MR100, MR555, and 400X-110A (each manufactured by ZEON CORPORATION), Nippollan N2301, N2302 and N2304 (each manufactured by NIPPON POLYURETHANE INDUSTRY CO., LTD.), Pandex T-5105, T-R3080 and T-5201, Burnock D-400 and D-210-80 and Crisvon 6109 and 7209 (each manufactured by DAINIPPON INK AND CHEMICALS, INCORPORATED), Vylon UR8200, UR8300, UR8700, RV530, and RV280 (each manufactured by TOYOBO CO., LTD.), Daiferamine 4020, 5020, 5100, 5300, 9020, 9022, and 7020 (each manufactured by Dainichiseika Color & Chemicals Mfg. Co., Ltd.), MX 5004 (trade name, manufactured by MITSUBISHI CHEMICAL CORPORATION), Sanprene SP-150 (trade name, manufactured by SANYO KASEI Co., Ltd.), and Saran F310 and F210 (trade name, manufactured by Asahi Kasei Corporation).

When a magnetic layer is formed together with a non-magnetic layer, the binder may also be contained in the non-magnetic layer. When used in the non-magnetic and magnetic layers, the binder preferably has a content of 2 to 50% by mass, more preferably of 10 to 30% by mass, based on the total mass of the non-magnetic powder in the non-magnetic layer or based on the total mass of the ferromagnetic ordered alloy (the magnetic particles) in the magnetic layer. Preferred is 5 to 30% by mass of the vinyl chloride resin, 2 to 20% by mass of the polyurethane resin or 2 to 20% by mass of the polyisocyanate, and any combination thereof is preferably used. In a case where a very small amount of desorbed chlorine can cause head corrosion, for example, only the polyurethane resin or only a combination of the polyurethane resin and the polyisocyanate may be used.

When the polyurethane resin is used, it preferably has a glass transition temperature of -50 to 150°C, more preferably of 0 to 100°C, still more preferably of 30 to 90°C, a breaking elongation of 100 to 2000%, a breaking stress of 0.05 to 10 kg/mm² (0.49 to 98 MPa), and a yield point of 0.05 to 10 kg/mm² (0.49 to 98 MPa).

According to the invention, the magnetic layer of the magnetic recording medium may be monolayer but preferably comprises not more than two layers. If desired, therefore, the respective layers may vary in the amount of the binder, the amount of the vinyl chloride resin, the polyurethane resin, the polyisocyanate, or any other resin contained in the binder, the molecular weight of each resin that forms the magnetic layer, the amount of the polar group, or the physical properties of any of the above resins, or rather, the layers should be optimized, respectively, and any known technique for the magnetic multilayer may be used.

In a case where the respective layers vary in the amount of the binder, it is effective to increase the amount of the binder in the magnetic layer in reducing the abrasion of the magnetic layer surface. For good touch on head, the non-magnetic layer may contain a larger amount of the binder so as to have flexibility.

Examples of the polyisocyanate include isocyanates such as tolylene diisocyanate, 4,4'-diphenylmethane diisocyanate, hexamethylene diisocyanate, xylylene diisocyanate, naphthylene-1,5-diisoyanate, o-toluidine diisocyanate, isophorone diisocyanate, and triphenylmethane triisocyanate; reaction products of any of these isocyanates and a polyalcohol; and polyisocyanates formed by the condensation reaction of an isocyanate.

These isocyanates are commercially available under the trade names of Coronate L, Coronate HL, Coronate 2030, Coronate 2031, Millionate MR, and Millionate MTL (trade name, manufactured by NIPPON POLYURETHANE INDUSTRY CO., LTD.), Takenate D-102, Takenate D-110N, Takenate D-200, and Takenate D-202 (trade name, manufactured by TAKEDA CHEMICAL INDUSTRIES, LTD.), and Desmodur L, Desmodur IL, Desmodur N, and Desmodur HL (trade name, manufactured by Bayer Chemicals Japan Ltd.). Each layer may use one of these isocyanates or may use a combination of two or more of these isocyanates for the benefit of the difference in curing reactivity.

The coating liquid prepared by adding the binder, the polar solvent and the nonpolar solvent to the magnetic particle-containing liquid is applied to a support by the means as described below (the application step) and optionally subjected to drying or the like to form a magnetic layer so that the magnetic recording medium of the invention is produced.

In the magnetic recording medium of the invention produced as shown above, the magnetic layer is produced with the coating liquid as shown above and thus contains the magnetic particles, the binder, the polar solvent, and the nonpolar solvent.

In the coating liquid, as described above, the magnetic particles exist in a highly dispersed state without aggregating with each other. In the magnetic layer produced with such a coating liquid, therefore, the binder, the polar solvent and the nonpolar solvent exist on the surfaces of the magnetic particles, so that they can exhibit ferromagnetism at high efficiency without aggregating with each other. In addition, re-dispersion of the magnetic particles is not necessary, so that the productivity of the magnetic recording medium can be high. The magnetic recording medium is preferably produced through such a process, and the polar solvent and the nonpolar solvent remains eventually.

The existence of the magnetic particles can be confirmed by an X-ray diffraction method or the like, while the solvent remaining in the magnetic recording medium may be measured by gas chromatography or the like so that the binder, the polar solvent, or the nonpolar solvent can be evaluated and confirmed.

The magnetic recording medium of the invention may have any structure, as long as it comprises the support and the magnetic layer that is formed on the support and contains the magnetic particles, the binder, the polar solvent, and the nonpolar solvent. For example, the magnetic recording medium comprises the support and the non-magnetic layer and the magnetic layer which are sequentially formed on the support, and optionally comprises a back layer, an undercoat layer or the like, which is also formed on the support. The magnetic layer or the like may contain any of various additives in addition to the above four components.

The support and the respective layers including the magnetic layer are described below.

### Support

In the invention, any inorganic or organic support may be used as long as it is applicable to the magnetic recording medium. The magnetic particles of the invention are already annealed and ferro-magnetized in the solvent, and thus do not have to be annealed at high temperature after applied to the substrate. Thus, an organic support can be used without problems, even if it would otherwise have a problem with heat resistance. From this point of view, the organic support can particularly preferably be used.

Examples of the material for the inorganic support include Al, a Mg alloy such as Al-Mg and Mg-Al-Zn, glass, quartz, carbon, silicon, and ceramics. These supports have good resistance to impact or rigidity suitable for slimming or high speed rotation. The inorganic support is more resistant to heat than the organic support.

Examples of the material for the organic support include polyesters (such as polyethylene terephthalate and polyethylene naphthalate), polyolefins, cellulose triacetate, polycarbonate, polyamide (including aliphatic polyamide and aromatic poluamide such as aramid) , polyimide, polyamideimide, polysulfone, and polybenzoxazole.

The support for use in the invention is not particularly limited and preferably a practically nonmagnetic and flexible support. Use of a high-strength support such as polyethylene naphthalate, polyamide, or the like is preferable.

Organic supports are lower in cost than inorganic supports such as metals and the like and thus contribute to high-productivity production of magnetic recording media. For that reason, use of an organic support as the support is preferable.

Organic supports generally carry a problem of heat resistance, but as the magnetic particles according to the invention are annealed before they are applied onto a support as described above, there are no problems associated with the heat resistance of the organic support. Thus, the organic supports allow production of favorable magnetic recording media without warping or deterioration.

For application of the magnetic particles on a support, additives may be added as needed to the magnetic particle-containing liquid after annealing and the resulting mixture may be applied on the support.

The content of the magnetic particles then is preferably a desirable concentration in the range of 0.01 to 0.1 mg/ml.

Examples of the methods of coating supports include air doctor coating, blade coating, rod coating, extrusion coating, air knife coating, squeeze coating, impregnation coating, reverse roll coating, transfer roll coating, gravure coating, kiss coating, cast coating, spray coating, spin coating, and the like.

As described above, the magnetic recording medium of the invention can be prepared by applying magnetic particles (magnetic particle-containing liquid) on a support, drying the resulting medium at 40 to 200°C, and thus forming a magnetic layer thereon.

The magnetic recording medium of the invention does not demand annealing at high temperature after the magnetic particles are applied on the support, as the magnetic layer contains previously ferro-magnetized magnetic particles. As a result, it is possible to avoid aggregation of magnetic particles at high temperature and thus provide magnetic recording media wherein the magnetic particles are present in a high-dispersion state in the magnetic layer.

The thickness of the magnetic layer formed may vary according to the magnetic recording media to be applied, but is preferably 4 nm to 1 µm and more preferably 4 to 100 nm.

An undercoat layer may be placed between the support and the magnetic layer for improvement in adhesion. The thickness of the undercoat layer is preferably 0.005 to 0.5 µm, more preferably 0.01 to 0.5 µm, and still more preferably 0.02 to 0.5 µm.

In addition to a magnetic layer, the magnetic recording medium of the invention may have other layers if desired. It is preferable to form at least one conductive layer and to form a back layer (backcoat layer) on the reverse face of support where no magnetic layer is formed.

For example, in the case of magnetic disk, additional magnetic and nonmagnetic layers are preferably formed on the face of the support opposite to the face where the magnetic layer is formed. In the case of magnetic tape, a back layer is preferably formed on the insoluble face of the support opposite to the face where the magnetic layer is formed.

In addition, it is possible to prepare magnetic recording media significantly higher in reliability, by forming a very thin protective film over the magnetic layer for improvement in abrasion resistance and additionally applying a lubricant onto the protective film for improvement in lubricity.

If necessary, a laminate type support as disclosed in JP-A No. 03-224127 may be used for the purpose of changing the surface roughness of the support surface on which the magnetic layer and the back layer will be formed. Any of these supports may be subjected to corona discharge treatment, plasma treatment, adhesion-facilitating treatment, heat treatment, dust-removing treatment, or the like, in advance.

The center plane average surface roughness (Ra) of the support measured with TOPO-3D manufactured by WYKO Corporation is generally preferably 8.0 nm or less, more preferably 4.0 nm or less, still more preferably 2.0 nm or less. It is preferred that the support should not only have a low center plane average surface roughness but also be free from a coarse projection of 0.5 µm or higher.

The shape of the surface roughness may be freely controlled by the size and amount of a filler which is added to the support as needed. Examples of such a filler include fine particles of an inorganic material such as an oxide or carbonate of Ca, Si, Ti, or the like, and a fine organic powder of acrylic resin or the like. Preferably, the support is 1 µm or less in maximum height of irregularities (Rmax), 0.5 µm or less in ten point height of irregularities (Rz), 0.5 µm or less in center plane top height (Rp), 0.5 µm or less in center plane valley depth (Rv), from 10% to 90% in center plane area rate (Sr), and from 5 to 300 µm in average wavelength (λa). In order to provide the desired electromagnetic transfer characteristic and durability, the distribution of the surface projections of the support may be freely controlled using the filler, which may be controlled in the range from 0.01 µm to 1 µm in size and in the range from 0 to 2000 per 0.1 mm² in the number of particles.

The F-5 value of the support is preferably from 5 to 50 kg/ mm² (49 to 490 MPa). The support preferably shows a thermal contraction rate of 3% or less, more preferably of 1.5% or less when heated at 100°C for 30 minutes, and preferably shows a thermal contraction rate of 1% or less, more preferably of 0.5% or less when heated at 80°C for 30 minutes. Preferably, the support has a breaking strength of 5 to 100 kg/mm² (49 to 980 MPa), an elastic modulus of 100 to 2000 kg/mm² (0.98 to 19.6 GPa), a thermal expansion coefficient of 10⁻⁸ to 10⁻⁴/°C, more preferably of 10⁻⁶ to 10⁻⁵/°C, and a humidity expansion coefficient of 10⁻⁴/RH% or less, more preferably 10⁻⁵/RH% or less. In a preferred mode, the thermal characteristics, the size characteristics, or the mechanical strength characteristics are substantially equal in all in-plane directions within a difference of 10% or less.

The support preferably has a thickness of 2 to 100 µm, more preferably of 2 to 80 µm. In the case of a computer tape, the support preferably has a thickness of 3.0 to 6.5 µm, more preferably of 3.0 to 6.0 µm, still more preferably of 4.0 to 5.5 µm.

### Magnetic Layer

The magnetic layer contains the magnetic particles, the binder, the polar solvent, and the nonpolar solvent, and optionally contains any of various additives.

The magnetic recording medium of the invention may have the magnetic layer on one or both sides of the support. A non-magnetic layer may be provided between the support and the magnetic layer in terms of providing a lubricant source and covering the projections of the support.

When the non-magnetic layer is formed on the support, the magnetic layer (also referred to as an "upper layer" or an "upper magnetic layer") may then be formed by coating while the non-magnetic layer is in a wet state (W/W) or after the non-magnetic layer is dried (W/D). In terms of production efficiency, it is preferred that they should be formed simultaneously or sequentially through the wet-state coating. In the case of a disk, however, the coating can sufficiently be achieved after the drying.

In the process of forming the laminate (the non-magnetic layer and the magnetic layer), both layers may be formed simultaneously, or the non-magnetic layer and the magnetic layer may be completed at the same time through the sequential wet-state coating process (W/W). Thus, a surface treatment process such as a calendering process can effectively be used, so that the surface roughness of the upper magnetic layer can be improved even if it is very thin.

The thickness of the magnetic layer is preferably from 0.005 µm to 0.20 µm, more preferably from 0.01 µm to 0.10 µm. If the thickness is in the range from 0.005 µm to 0.20 µm, the reproduction power can be prevented from being reduced, and the overwriting characteristics and the resolution can also be prevented from being degraded.

### Carbon Black and Abrasive Material

The magnetic layer preferably contains carbon black. Examples of the carbon black for use include furnace black for rubber, thermal black for rubber, black for coloring, and acetylene black.

The carbon black preferably has a SBET of 5 to 500 m²/g, a DBP oil absorption of 10 to 400 ml /100 g, an average particle diameter of 5 to 300 nm, more preferably of 10 to 250 nm, still more preferably of 20 to 200 nm, a pH of 2 to 10, a water content of 0.1 to 10%, and a tap density of 0.1 to 1. 0 g/ ml.

Specific examples of the carbon black include BLACKPEARLS-2000, 1300, 1000, 900, 905, 800, and 700, and VULCAN XC-72 (each manufactured by Cabot Corporation), #80, #60, #55, #50, and #35 (each manufactured by Asahi Carbon Co., Ltd.), #2400B, #2300, #900, # 1000, #30, #40, and #10B (each manufactured by Mitsubishi Chemical Co., Ltd.), and CONDUCTEX SC, RAVEN 150, 50, 40, and 15, and RAVEN-MT-P (each manufactured by Columbian Chemicals Company), and Ketjenblack EC (trade name, manufactured by Japan EC Company).

The carbon black may be subjected to a surface treatment with a dispersing agent or the like or subjected to grafting with a resin before use. The surface of the carbon black may also partially be converted into graphite. Before added to a magnetic coating, the carbon black may be dispersed with a binder in advance.

One or more of these carbon blacks may be used alone or in combination. The carbon black is preferably used in an amount of 0.1 to 30% based on the total mass of the magnetic material (magnetic particles). The carbon black has the function of preventing static electrification of the magnetic layer, reducing the coefficient of friction, imparting light-shielding properties, or improving the film strength, depending on its type. Therefore, of course, the upper magnetic layer and the lower non-magnetic layer may differ in the type, amount, or combination of the carbon black(s) in the invention, and the carbon blacks may properly be used depending on purpose in view of the above-described characteristics such as the particle size, the oil absorption, the electrical conductivity, and pH. The carbon black should rather be optimized in each layer. For example, the text "Carbon Black Handbook" (edited by the Carbon Black Association of Japan) may be referred to, regarding the carbon black for use in the magnetic layer according to the invention.

The magnetic layer also preferably contains an abrasive material. The abrasive material may be mainly any one or any combination of known materials with a Mohs' hardness of 6 or more, such as α-alumina, β-alumina, silicon carbide, chromium oxide, cerium oxide, α-iron oxide, corundum, artificial diamond, silicon nitride, silicon carbide, titanium carbide, titanium oxide, silicon dioxide, and boron nitride. Any complex of these abrasive materials (in which one abrasive is surface-treated with another abrasive) may also be used. In some cases, the abrasive material contains any other compound or element besides the main component. If the content of the main component is 90% by mass or more in such cases, however, the effect should be the same.

The particle size of the abrasive material is preferably from 0.005 to 2 µm, more preferably 0.01 to 2 µm, even more preferably from 0.05 to 1.0 µm, still more preferably from 0.05 to 0.5 µm.

The particle size distribution should preferably be narrow for improvement in electromagnetic transfer characteristics. For the purpose of improving the durability, abrasive materials different in particle size may be used in combination as needed, or a single abrasive material having a wide particle size distribution may be used for the same effect. Preferably, the abrasive material has a tap density of 0.3 to 2 g/ml, a water content of 0.1 to 5%, a pH of 2 to 11, and a SBET of 1 to 30 m²/g. The shape of the abrasive material may be any of a needle, a sphere and a cube, and preferably has a sharp edge part for high abrasive properties.

Specific examples thereof include AKP-12, AKP-15, AKP-20, AKP-30, AKP-50, HIT20, HIT-30, HIT-55, HIT60A, HIT70, HIT80, and HIT100 (each manufactured by Sumitomo Chemical Co., Ltd.), ERC-DBM, HP-DBM and HPS-DBM (each manufactured by Reynolds Corporation), WA10000 (trade name, manufactured by Fujimi Kenmazai Corporation), UB20 (trade name, manufactured by Uyemura & Co., Ltd.), G-5, Kromex U2 and Kromex U1 (each manufactured by Nippon Chemical Industrial Co., Ltd.), TF100 and TF140 (each manufactured by TODA KOGYO CORP.), beta-Random Ultrafine (trade name, manufactured by IBIDEN CO., LTD.), and B-3 (trade name, manufactured by Showa Mining Co., Ltd.). If desired, any of these abrasive materials may be added to the non-magnetic layer, so that the shape of the surface or the state of the abrasive material projection can be controlled. Of course, the particle diameter and amount of the abrasive material to be added to the magnetic layer or the non-magnetic layer should each be set at an optimal value.

### Additives

The magnetic layer and the non-magnetic layer as described below preferably contain any of various additives. The additive for proper use should have at least one effect of a lubricating effect, an antistatic effect, a dispersing effect, and a plastic effect.

Examples thereof include molybdenum disulfide, tungsten disulfide, graphite, boron nitride, graphite fluoride, a silicone oil, a polar group-containing silicone, a fatty acid-modified silicone, a fluorine-containing silicone, a fluorine-containing alcohol, a fluorine-containing ester, a polyolefin, a polyglycol, an alkyl phosphate and an alkali metal salt thereof, an alkyl sulfate and an alkali metal salt thereof, polyphenyl ether, phenyl phosphonic acid, α-naphthyl phosphoric acid, phenyl phosphoric acid, diphenyl phosphoric acid, p-ethylbenzene phosphonic acid, phenyl phosphinic acid, aminoquinones, various silane coupling agents, titanium coupling agents, a fluorine-containing alkyl sulfate and an alkali metal salt thereof, a monobasic fatty acid of 10 to 24 carbon atoms (which may have an unsaturated bond or may be branched) and a metal salt thereof (with Li, Na, K, Cu, or the like), a mono-, di-, tri-, tetra-, penta-, or hexa-hydric alcohol of 12 to 22 carbon atoms (which may have an unsaturated bond or may be branched), an alkoxy alcohol of 12 to 22 carbon atoms, a mono-, di- or tri-fatty acid ester comprising a monobasic fatty acid of 10 to 24 carbon atoms (which may have an unsaturated bond or may be branched) and any one of mono-, di-, tri-, tetra-, penta-, and hexa-hydric alcohols of 2 to 12 carbon atoms (which may have an unsaturated bond or may be branched), a fatty acid ester of a monoalkyl ether of an alkylene oxide polymer, a fatty acid amide of 8 to 22 carbon atoms, and an aliphatic amine of 8 to 22 carbon atoms.

Specific examples of the fatty acid include capric acid, caprylic acid, lauric acid, myristic acid, palmitic acid, stearic acid, behenic acid, oleic acid, elaidic acid, linolic acid, linolenic acid, and isostearic acid. Specific examples of the ester include butyl stearate, octyl stearate, amyl stearate, isooctyl stearate, butyl myristate, octyl myristate, butoxyethyl stearate, butoxydiethyl stearate, 2-ethylhexyl stearate, 2-octyldodecyl palmitate, 2-hexyldodecyl palmitate, isohexadecyl stearate, oleyl oleate, dodecyl stearate, tridecyl stearate, oleyl erucate, neopentyl glycol didecanoate, and ethylene glycol dioleyl. Specific examples of the alcohol include oleyl alcohol, stearyl alcohol and lauryl alcohol.

Examples of the applicable additive also include a nonionic surfactant such as an alkylene oxide type, a glycerol type, a glycidol type, and an alkylphenol-ethylene oxide adduct; a cationic surfactant such as a cyclic amine, an ester amide, a quaternary ammonium salt, a hydantoin derivative, a heterocyclic compound, a phosphonium compound, or a sulfonium compound; an anionic surfactant having an acidic group such as a carboxylic acid, a sulfonic acid, a phosphoric acid, a sulfate ester group, and a phosphate ester group; and an amphoteric surfactant such as an amino acid, an aminosulfonic acid, a sulfate or phosphate ester of an amino alcohol, and an alkyl betaine type.

Such surfactants are described in detail in the text "Surfactant Handbook" (published by Sangyo Tosho Publishing). The lubricant, the antistatic agent or the like does not have to be 100% pure and may contain impurities such as an isomer, an unreacted material, a byproduct, a decomposed product, and an oxide, besides the main component. The content of such impurities is preferably 30% by mass or less, more preferably 10% by mass or less.

These lubricants and surfactants have different physical actions, respectively, and the type and amount of the lubricant or the surfactant and the mixing ratio of the lubricant and the surfactant for producing a synergistic effect should be optimized depending on a purpose. Examples of such a purpose include, but of course are not limited to, (1) control of exudation to the surface by using fatty acids different in melting point in the non-magnetic and magnetic layers, (2) control of exudation to the surface by using esters different in boiling point, melting point or polarity, (3) improvement in application stability by controlling the amount of the surfactant, and (4) improvement in the lubricating effect by increasing the amount of the lubricant added to an intermediate layer. In general, the total amount of the lubricant is preferably from 0.1 to 50% by mass, more preferably from 2 to 25% by mass, based on the amount of the magnetic material (magnetic particles) or the non-magnetic powder.

In the invention, the whole or part of the additive(s) may be added in any step of the magnetic coating-manufacturing process and the non-magnetic coating-manufacturing process. For example, the additive(s) may be mixed with the magnetic material before the kneading step, may be added in the step of kneading the magnetic material, the binder and the solvent, may be added in the dispersing step, may be added after the dispersing step, or may be added immediately before the application.

In some cases, after the magnetic layer is applied depending on the purpose, the whole or part of the additive(s) may be applied simultaneously or sequentially so that the purpose can be achieved. Depending on the purpose, a calender treatment or slitting may be performed, and then the lubricant may be applied to the surface of the magnetic layer.

### Non-Magnetic Layer

A detailed description is then provided of the non-magnetic layer. The non-magnetic layer may have any structure, as long as it is substantially non-magnetic. In general, it comprises at least a resin, in which a power such as an inorganic or organic power is preferably dispersed. The inorganic power is preferably non-magnetic but may be magnetic as long as the formed layer is substantially non-magnetic.

The particle size (particle diameter) of the non-magnetic powder is preferably in the range from 0.005 to 2 µm. If desired, non-magnetic powers different in particle size may be used in combination, or even a single non-magnetic powder with a wide particle size distribution may be used to produce the same effect. In particular, the particle size of the non-magnetic powder is preferably in the range from 0.01 µm to 0.2 µm. Specifically, when the non-magnetic powder is granular metal oxide, its average particle diameter is preferably 0.08 µm or less. In the case of a non-magnetic needle-shaped metal oxide powder, its major axis length is preferably 0.3 µm or less, more preferably 0.2 µm or less. Preferably, the non-magnetic powder has a tap density of 0.05 to 2 g/ml, more preferably of 0.2 to 1.5 g/ml, a water content of 0.1 to 5% by mass, more preferably of 0.2 to 3% by mass, still more preferably of 0.3 to 1.5% by mass, and a pH of 2 to 11, particularly preferably of 5.5 to 10.

The SBET (specific surface area) of the non-magnetic powder is preferably from 1 to 100 m²/g, more preferably from 5 to 80 m²/g, still more preferably from 10 to 70 m²/g. The crystallite size (diameter) of the non-magnetic powder is preferably from 0.004 µm to 1 µm, more preferably from 0.04 µm to 0.1 µm. Its oil absorption determined with DBP (dibutyl phthalate) is preferably from 5 to 100 ml/ 100 g, more preferably from 10 to 80 ml/ 100 g, still more preferably from 20 to 60 ml/ 100g. The specific gravity of the non-magnetic powder is preferably from 1 to 12, more preferably from 3 to 6. Its shape may be any one of acicular, spherical, polyhedral, and tabular shapes. Its Mohs' hardness is preferably from 4 to 10.

The SA (stearic acid) absorption of the non-magnetic powder is preferably from 1 to 20 µmol/m², more preferably from 2 to 15 µmol/m², still more preferably from 3 to 8 µmol/m². Its pH is preferably between 3 and 6.

For example, the non-magnetic powder may be selected from inorganic compounds such as metal oxides, metal carbonates, metal sulfates, metal nitrides, metal carbides, and metal sulfides. Examples of such inorganic compounds include α-alumina with an α-component proportion of 90% or more, β-alumina, γ-alumina, θ-alumina, silicon carbide, chromium oxide, cerium oxide, α-iron oxide, hematite, goethite, corundum, silicon nitride, titanium carbide, titanium oxide, silicon dioxide, tin oxide, magnesium oxide, tungsten oxide, zirconium oxide, boron nitride, zinc oxide, calcium carbonate, calcium sulfate, barium sulfate, and molybdenum disulfide, and one or more of these inorganic compounds may be used alone or in combination. In terms of narrow particle-size distribution, multifunction or the like, titanium dioxide, zinc oxide, iron oxide or barium sulfate is particularly preferred, and titanium dioxide or α-iron oxide is most preferred.

Specific examples (by product name) of the non-magnetic powder include Nanotite (trade name, manufactured by SHOWA DENKO K.K.), HIT-100 and ZA-G1 (each manufactured by Sumitomo Chemical Co., Ltd.), α-hematite DPN-250, DPN-250BX, DPN-245, DPN-270BX, DPN-500BX, DBN-SA1, and DBN-SA3 (each manufactured by TODA KOGYO CORP.), titanium oxide TTO-51B, TTO-55A, TTO-55B, TTO-55C, TTO-55S, TTO-55D, SN-100, α-hematite E270, E271, E300, and E303 (each manufactured by ISHIHARA SANGYO KAISHA LTD.), titanium oxide STT-4D, STT-30D, STT-30, and STT-65C, and α-hematite α-40 (each manufactured by TITAN KOGYO KABUSHIKI KAISHA), MT-100S, MT-100T, MT-150W, MT-500B, MT-600B, MT-100F, and MT-500HD (each manufactured by Tayca Corporation), FINEX-25, BF-1, BF-10, BF-20, and ST-M (each manufactured by SAKAI CHEMICAL INDUSTRY CO., LTD.), DEFIC-Y and DEFIC-R (each manufactured by Dowa Mining Co., Ltd.), AS2BM and TiO2P25 (each manufactured by Nippon Aerosil Co., Ltd.), and 100A and 500A (each manufactured by UBE INDUSTRIES, LTD.). Particularly preferred are a non-magnetic titanium dioxide powder and a non-magnetic α-iron oxide powder.

The surface of the non-magnetic powder is preferably surface-treated so as to have any one of Al₂O₃, SiO₂, TiO₂, ZrO₂, SnO₂, Sb₂O₃, ZnO, and Y₂O₃. In view of dispersibility, Al₂O₃, SiO₂, TiO₂, or ZrO₂ is preferred, and Al₂O₃, SiO₂ or ZrO₂ is more preferred. One or more of these materials may be used alone or in combination. Depending on purpose, a co-precipitated surface treatment layer may also be used, or the employed method may include the steps of allowing alumina to exist and then treating the surface layer with silica or vice versa. Depending on purpose, the surface treatment layer may be porous but is generally preferably homogeneous and dense.

If the non-magnetic layer contains carbon black and thus has a reduced surface electric resistance Rs, the light transmission factor can be made smaller, and the desired micro-Vickers hardness can also be obtained. The carbon black-containing non-magnetic layer can also have a lubricant-storing effect. The type of the carbon black may be furnace black for rubber, thermal black for rubber, black for coloring, acetylene black, or the like. The characteristics of the carbon black in the non-magnetic layer as shown below should be optimized depending on the desired effect, and a combination of the carbon blacks may be more effective in some cases.

Preferably, the carbon black in the non-magnetic layer has a SBET of 100 to 500 m²/g, more preferably of 150 to 400 m²/g, a DBP oil absorption of 20 to 400 ml/ 100 g, more preferably of 30 to 400 ml/ 100 g, a particle size of 5 nm to 80 nm, more preferably of 10 to 50 nm, still more preferably of 10 to 40 nm, a pH of 2 to 10, a water content of 0.1 to 10%, and a tap density of 0.1 to 1 g/ml.

Specific examples (by product name) of the carbon black for use in the invention include BLACKPEARLS 2000, 1300, 1000, 900, 800, 880, and 700, and VULCAN XC-72 (each manufactured by Cabot Corporation), #3050B, #3150B, #3250B, #3750B, #3950B, #950, #650B, #970B, #850B, MA-600, MA-230, #4000, and #4010 (each manufactured by Mitsubishi Chemical Co., Ltd.), and CONDUCTEX SC, RAVEN 8800, 8000, 7000, 5750, 5250, 3500, 2100, 2000, 1800, 1500, 1255, and 1250 (each manufactured by Columbian Chemicals Company), and Ketjenblack EC (trade name, manufactured by Akzo Nobel).

The carbon black may be subjected to a surface treatment with a dispersing agent or subjected to grafting with a resin before use. The surface of the carbon black may also partially be converted into graphite. Before added to a coating material, the carbon black may be dispersed with a binder in advance. Any of these carbon blacks may be used in an amount of not more than 50% by mass based on the amount of the inorganic powder and in an amount of not more than 40% base on the total mass of the non-magnetic layer. One or more of these carbon blacks may be used alone or in combination. For example, the text "Carbon Black Handbook" (edited by the Carbon Black Association of Japan) may be referred to, regarding the carbon black for use in the invention.

Any organic power may also be added to the non-magnetic layer, depending on purpose. Examples thereof include acrylic styrene resin powder, benzoguanamine resin powder, melamine resin power, and phthalocyanine pigments. Polyolefin resin powder, polyester resin powder, polyamide resin powder, polyimide resin powder, or polyethylene fluoride resin may also be used. Such a powder may be prepared using the method disclosed in JP-A No. 62-18564 or 60-255827.

The non-magnetic layer preferably has a thickness of 0.2 µm to 5.0 µm, more preferably of 0.3 µm to 3.0 µm, still more preferably of 1.0 µm to 2.5 µm.

If the non-magnetic layer is substantially non-magnetic, it should be effective. For example, therefore, it may contain impurities or the intended small amount of a magnetic substance (magnetic material). The wording "substantially non-magnetic" refers to a residual magnetic flux density of not more than 0.01 T or a coercivity of not more than 7.96 kA/m (not more than 100 Oe) and preferably refers to no residual magnetic flux density or no coercivity.

The binder resin, the lubricant, the dispersing agent, the additives, the solvent, the dispersing method, or the like for the magnetic layer may also be used for the non-magnetic layer. In particular, any known technique for the magnetic layer may be applied to the amount and type of the binder resin or the addition amount and type of the additives or the dispersing agent.

An undercoat layer may be provided between the support and the non-magnetic layer or the magnetic layer in order to improve the adhesion. The thickness of the undercoat layer is preferably from 0.005 to 0.5 µm, more preferably from 0.01 to 0.5 µm, still preferably from 0.02 to 0.5 µm. The magnetic recording medium of the invention may be a disk-shaped medium comprising the support and the non-magnetic layer and the magnetic layer which are formed on both sides of the support. There may be provided another tape- or disk-shaped medium comprising the support and the non-magnetic layer and the magnetic layer which are formed on only one side of the support. In this case, a back layer may also be provided on the side opposite to the non-magnetic or magnetic layer side, in order to produce an effect such as an antistatic effect and a curl-correcting effect. The thickness of the back layer is preferably from 0.1 to 4 µm, more preferably from 0.3 to 2.0 µm. The undercoat layer and the back layer as described below may be made of any known material.

### <<Preparation of magnetic layer and the like>>

First, a nonpolar solvent is mixed with a magnetic particle-containing liquid that contains the magnetic particles prepared as described above, and the magnetic particles in the mixture are dispersed well. Then, a polar solvent containing a binder is mixed with the magnetic particle-containing liquid after mixing, to give a coating liquid for preparing magnetic layers. If addition of additives such as carbon black, abrasive, and the like to the coating liquid is desirable, they may be added after the coating liquid is prepared, or may be added previously to the polar solvent or the magnetic particle-containing liquid. The order of adding the binder and the polar and nonpolar solvents is also not particularly limited if the dispersion of the magnetic particles is not impaired, but these additives are added as described above.

On the other hand, if a nonmagnetic layer is formed, a coating liquid for nonmagnetic layers is prepared by mixing the nonmagnetic particles above, a binder, and the like in a known solvent.

During preparation of the coating liquid for magnetic or nonmagnetic layers, the coating liquid may be blended for dissolving the dispersants by using an open kneader, continuous kneader, pressurized kneader, extruder, or the like. Dispersion media such as glass beads, zirconia beads, titania beads, steel beads, and the like may be used for dispersing the magnetic and nonmagnetic particle.

Then, a magnetic layer may be formed by applying a coating liquid for magnetic layers onto a support by any one of known methods.

If a magnetic recording medium having a laminate of nonmagnetic and magnetic layers is desirable, such a recording medium is preferably prepared by the following methods:

In the first method, a nonmagnetic layer is first coated by using a commonly used gravure coating, roll coating, blade coating, extrusion coating, or other apparatus, and then a magnetic layer is coated while the nonmagnetic layer is still wet, by using the support pressurized extrusion coating apparatus disclosed in JP-B No. 2-265672.

In the second method, nonmagnetic and magnetic layers are applied almost concurrently via the coating head having two coating liquid-supplying slits disclosed in JP-A Nos. 63-88080, 2-17971, and 2-265672.

In the third method, nonmagnetic and magnetic layers are formed almost concurrently by using the extrusion coating apparatus equipped with a backup roll disclosed in JP-A No.174965.

It is desirable to provide the coating liquid stored in the coating head with shear force by the methods disclosed in JP-A Nos. 62-95174 and 1-236968, for preventing decrease of the magnetic parametric performance or the like of magnetic recording medium due to aggregation of magnetic particles. In addition, the viscosities of the coating liquids for magnetic and nonmagnetic layers preferably satisfy the numerical range disclosed in JP-A No. 3-8471. A laminate may be prepared by successive multiple coating, namely, a nonmagnetic layer is first applied and dried, and then a magnetic layer is formed. However, use of the simultaneous multiple coating described above is preferable for reducing coating defects and quality defects such as dropout.

Particularly in the case of magnetic disk, although it is sometimes possible to obtain sufficiently isotropic orientation even without orientation or without use of an orientation device, it is more preferable to use a random orientation device known in the art, wherein cobalt magnets are arranged diagonally and alternately or an AC magnetic field is applied by solenoids. In the case of ferromagnetic metal powders, especially for use in high-density recording media, the isotropic orientation is preferable vertical orientation. Alternatively, the ferromagnetic metal powders may be oriented in the circumferential direction by using a spin coater.

In the case of magnetic tapes, magnetic powders are oriented in the longitudinal direction by using cobalt magnets and solenoids. It is preferable to make it possible to control the drying position of coated film by controlling the temperature of drying air, flow rate, and coating speed, and the coating speed is preferably 20 to 1000 m/min and the temperature of drying air is preferably 60°C or more. The coated film may be preliminary dried suitably before it is sent into the magnet zone.

After the application and drying above, the magnetic recording medium may be additionally calendered if needed. Heat-resistant plastic rolls such as those of epoxy, polyimide, polyamide, polyimide amide resin, or the like or metal rolls are used as the calendering rolls, and in particular, if magnetic layers are formed on both sides of substrate, processing by using only metal rolls is preferable. The processing temperature is preferably 50°C or more and more preferably 100°C or more.

The linear pressure is preferably 200 kg/cm (196 kN/m) or more and still more preferably 300 kg/cm (294 kN/m) or more.

In the manner above, the magnetic recording media of the invention are produced.

### (Back Layer)

As described above, if the magnetic recording medium is a magnetic tape or the like, a back layer may be formed on the face of support where the magnetic layer is not formed. Magnetic recording media, which require repeated running, sometimes demand high running durability. Presence of a back layer realizes high durability.

The back layer is a layer formed by applying a back layer-forming a coating solution, wherein particulate components such as abrasive, antistatic additive, and the like and a binder are dispersed in a known organic solvent, onto the face of nonmagnetic support where the magnetic layer is not formed. The thickness of the back layer is preferably 0.1 to 4 µm, more preferably 0.2 to 2.0 µm, and still more preferably 0.2 to 0.5 µm.

Various inorganic pigments and carbon black may be used as the particulate component, and resins such as nitrocelllulose, phenoxy resins, vinyl chloride resins, and polyurethane resins may be used alone or in combination as the binder.

In addition, on the face where the alloy particle-containing solution is applied and the backcoat layer is formed, another known adhesive layer may also be formed.

In contrast to video tapes or audio tapes, magnetic tapes for use in computer data recording are generally strongly required to be suited for repeated running. In order to keep such high running durability, the back layer should preferably contain carbon black and an inorganic powder.

Two types of carbon blacks different in average particle diameter are preferably used in combination. In such a case, a preferred combination comprises fine carbon black particles with an average particle diameter of 10 to 20 nm and coarse carbon black particles with an average particle diameter of 230 to 300 nm.

When such fine carbon black particles are added, the back layer can have a low surface electric resistance and a low light transmittance. Some magnetic recording apparatuses often use the light transmittance of the tape for operational signals. In such cases, the addition of the fine carbon black particles should particularly be effective. In general, the fine carbon black particles also have a high liquid-lubricant-holding power and can contribute to a reduction in coefficient of friction when used in combination with a lubricant.

On the other hand, the coarse carbon black particles with a volume average particle diameter of 230 to 300 nm have the function of serving as a solid lubricant. They can also form very small projections at the surface of the back layer to reduce the contact area and to contribute to a reduction in coefficient of friction. When the coarse carbon black particles are used alone, however, they can easily be dropped off from the back layer by tape sliding in a severe running system, so that the error rate can disadvantageously increase.

Specific examples of commercial products of the fine carbon black particles include the following, with each average particle diameter indicated inside the parentheses: RAVEN 2000B (18 nm) and RAVEN 1500B (17nm) (each manufactured by Columbian Chemicals Company), BP 800 (17 nm) (trade name, manufactured by Cabot Corporation), PRINTEX 90 (14 nm), PRINTEX 95 (15 nm), PRINTEX 85 (16 nm), and PRINTEX 75 (17 nm) (each manufactured by Degussa AG), and #3950 (16 nm) (trade name, manufactured by Mitsubishi Chemical Industries Ltd.).

Specific examples of commercial products of the coarse carbon black particles include Thermal Black (270 nm) (trade name, manufactured by Cancarb Ltd.) and RAVEN MTP (275 nm) (trade name, manufactured by Columbian Chemicals Company).

When the two types of particles different in average particle diameter are used in the back layer, the content ratio (mass ratio) of the fine carbon black particles with a volume average particle diameter of 10 to 20 nm to the coarse carbon black particles with a volume average particle diameter of 230 to 300 nm is preferably in the range from 75:25 to 98:2, more preferably in the range from 85:15 to 95:5.

The amount of the carbon black (or the total amount of the two types of carbon blacks) in the back layer is generally from 30 to 80 parts by mass, preferably from 45 to 65 parts by mass, based on 100 parts by mass of the binder.

The inorganic powder may use with carbon black.

Two types of inorganic powders different in hardness are preferably used in combination. For example, it is preferred to use a soft inorganic powder with a Mohs' hardness of 3 to 4.5 and a hard inorganic powder with a Mohs' hardness of 5 to 9. When such a soft inorganic powder with a Mohs' hardness of 3 to 4.5 is added, the coefficient of friction can be stabilized against repeated running. In such a hardness range, a slide guide pole can also be prevented from being abraded. Such an inorganic powder preferably has an average particle diameter of 30 to 50 nm.

Examples of the soft inorganic powder with a Mohs' hardness of 3 to 4.5 include calcium sulfate, calcium carbonate, calcium silicate, barium sulfate, magnesium carbonate, zinc carbonate, and zinc oxide. One or more of these materials may be used alone or in combination.

The amount of the soft inorganic powder in the back layer is preferably in the range from 10 to 140 parts by mass, more preferably from 35 to 100 parts by mass, based on 100 parts by mass of the carbon black.

When the hard inorganic powder with a Mohs' hardness of 5 to 9 is added, the strength of the back layer can be increased so that the running durability can be improved. When such an inorganic powder is used in combination with the carbon black and the soft inorganic powder, a strong back layer can be formed, which can be less degraded by repeated sliding. When such an inorganic powder is added, a moderately abrasive power can be provided so that the adhesion of shavings to a tape guide pole or the like can be reduced. Particularly when it is used in combination with the soft inorganic powder, the sliding characteristics can be improved with respect to a coarse surface guide pole, and the coefficient of friction of the back layer can also be stabilized.

The hard inorganic powder preferably has an average particle size in the range from 80 to 250 nm (more preferably from 100 to 210 nm).

Examples of the hard inorganic powder with a Mohs' hardness of 5 to 9 include α-iron oxide, α-alumina and chromium oxide (Cr₂O₃). One or more of these powdered materials may be used alone or in combination. In particular, α-iron oxide or α-alumina is preferred. The amount of the hard inorganic powder is generally from 3 to 30 parts by mass, preferably from 3 to 20 parts by mass, based on 100 parts by mass of the carbon black.

The soft and hard inorganic powders for use in combination in the back layer should preferably be selected so as to have a difference of 2 or more (more preferably of 2.5 or more, particularly preferably of 3 or more) in hardness.

The back layer preferably contains: the two types of the inorganic powders which are different in Mohs' hardness and each have a specific average particle size; and the two types of the carbon blacks different in average particle size.

The back layer may also contain a lubricant. Such a lubricant may be properly selected from the lubricants as shown above for the non-magnetic layer or the magnetic layer. Based on 100 parts by mass of the binder, 1 to 5 parts by mass of the lubricant is generally added to the back layer.

### Protective Film and the Like

A very thin protective film may be formed on the magnetic layer to improve the abrasion resistance. A lubricant may also be applied onto the protective film to increase the sliding properties so that the resulting magnetic recording medium can have sufficient reliability.

Examples of the material for the protective layer include oxides such as silica, alumina, titania, zirconia, cobalt oxide, and nickel oxide; nitrides such as titanium nitride, silicon nitride and boron nitride; carbides such as silicon carbide, chromium carbide and boron carbide; and carbon such as graphite and amorphous carbon. Particularly preferred is hard amorphous carbon generally called diamond-like carbon.

A protective carbon film made of carbon can have sufficient resistance to abrasion even when very thin, so that it can hardly cause heat sticking to a slide member. Thus, the carbon is preferred material for the protective film.

The protective carbon film is generally formed by a sputtering method in the case of a hard disk. A number of methods using a high deposition rate plasma CVD technique are proposed for a product which has to be formed through a continuous film formation, such as a video tape. Thus, any of these methods is preferably used.

Particularly, it is reported that a plasma injection CVD (PI-CVD) method can form a film at very high speed and can produce a hard protective carbon film with less pinholes and with good quality (for example, see JP-A Nos. 61-130487, 63-279426 and 03-113824).

The protective carbon film preferably has a Vickers hardness of not more than 1000 kg/mm², more preferably of not more than 2000 kg/mm². Preferably, it has an amorphous structure and is nonconductive.

When a diamond-like carbon film is used as the protective carbon film, its structure can be determined by Raman spectroscopic analysis. Specifically, when the diamond-like carbon film is measured, it can be confirmed by the detection of a peak at a wave number of 1520 to 1560 cm⁻¹. As the structure of the carbon film deviates from the diamond-like structure, the peak detected by the Raman spectroscopic analysis deviates from the above range, and the hardness of the protective film also decreases.

Preferred carbon materials for use in forming the protective carbon film include carbon-containing compounds such as alkanes such as methane, ethane, propane, and butane; alkenes such as ethylene and propylene; and alkynes such as acetylene. If desired, a carrier gas such as argon or an additive gas for improving the film quality, such as hydrogen and nitrogen may be added.

If the protective carbon film is too thick, the electromagnetic transfer characteristics can be degraded, or its adhesion to the magnetic layer can be reduced. If the film is too thin, its abrasion resistance can be insufficient. Thus, the film preferably has a thickness of 2.5 to 20 nm, more preferably of 5 to 10 nm.

In order to improve the adhesion between the protective film and the substrate side magnetic layer, it is preferred that the surface of the magnetic layer should be etched with an inert gas or modified by exposure to a reactive gas plasma such as oxygen plasma.

In order to improve the running durability and the corrosion resistance, it is preferred that a lubricant or an anti-corrosive agent should be applied to the magnetic layer or the protective film. The lubricant to be added may be a known hydrocarbon lubricant, a known fluoro-lubricant, a known extreme-pressure additive, or the like.

Examples of the hydrocarbon lubricant include carboxylic acids such as stearic acid and oleic acid; esters such as butyl stearate; sulfonic acids such as octadecyl sulfonic acid; phosphates such as monooctadecyl phosphate; alcohols such as stearyl alcohol and oleyl alcohol; carboxylic acid amides such as stearic acid amide; and amines such as stearylamine.

Examples of the fluoro-lubricant include modifications of the hydrocarbon lubricants in which part or the whole of the alkyl group is replaced with a fluoroalkyl group or a perfluoropolyether group.

The perfluoropolyether group may be a perfluoromethylene oxide polymer, a perfluoroethylene oxide polymer, a perfluoro-n-propylene oxide polymer (CF₂CF₂CF₂O)ₙ, a perfluoroisopropylene oxide polymer (CF(CF₃)CF₂O)ₙ, or any copolymer thereof.

The hydrocarbon lubricant may have a polar functional group such as a hydroxyl group, an ester group and a carboxyl group at the end of the alkyl group or in its molecule. Such a compound is preferred because it can be highly effective in reducing the frictional force.

Its molecular weight may be from 500 to 5000, preferably from 1000 to 3000. If the molecular weight is from 500 to 5000, the volatilization can be suppressed, and a reduction in lubricity can also be suppressed. In addition, viscosity rise can be prevented, and accidental stop of running or head crushing can also be prevented, which would otherwise be caused when a disk tends to adhere to a slider.

For example, such a perfluoropolyether is commercially available under the trade name of FOMBLIN (trade name, manufactured by Ausimont) or KRYTOX (trade name, manufactured by DuPont).

Examples of the extreme-pressure additive include phosphates such as trilauryl phosphate, phosphites such as trilauryl phosphite, thiophosphates and thiophosphites such as trilauryl trithiophosphite, and a sulfur extreme-pressure agent such as dibenzyl disulfide.

One or more of these lubricants may be used alone or in combination. Any of these lubricants may be applied to the magnetic layer or the protective layer by applying a solution of the lubricant in an organic solvent by a wire-bar method, a gravure method, a spin coating method, a dip coating method, or the like, or by depositing the lubricant by a vacuum vapor deposition method.

Examples of the anti-corrosive agent include nitrogen-containing heterocyclic compounds such as benzotriazole, benzimidazole, purine, and pyrimidine, and derivatives thereof in which an alkyl side chain is introduced to the main ring; and nitrogen and sulfur-containing heterocyclic compounds such as benzothiazole, 2-mercaptobenzothiazole, tetrazaindene cyclic compounds, and thiouracil compounds, and derivatives thereof.

### (Conductive layer)

If a conductive layer is formed on the magnetic recording medium of the invention, the conductive layer may be formed at least on one face of the nonmagnetic support, and if a conductive layer is formed on a magnetic layer, the conductive layer is preferably formed between the support and the magnetic layer, otherwise the distance between the magnetic layer and a head is expanded, leading to decrease in output due to spacing loss. If a magnetic layer is formed only on one face, the conductive layer may be placed on the same or reverse face of support with respect to the magnetic layer. If the conductive layer is placed on the reverse face, it is possible to form a conductive layer after annealing of the magnetic layer, thus eliminating the need for considering the heat resistance of the support and expanding the width of choice for selecting a suitable material. Alternatively, the conductive layer may be placed at the edge of the support.

Presence of a conductive layer suppresses electrostatic adhesion of dusts and the like. The backcoat layer described above sometimes functions as a conductive layer. On the contrary, the conductive layer sometimes functions as the backcoat layer above.

Conductive substances used for the conductive layer include conductive metal oxides, carbon black, and conductive polymeric compounds. Crystalline metal oxide particles are favorable as the conductive metal oxide for use in the invention, and those containing oxygen defect and containing a small amount of a foreign atom that functions as a donor to the metal oxide used are generally higher in electroconductivity and thus particularly preferable.

Examples of the metal oxides include ZnO, TiO₂ SnO₂, Al₂O₃, In₂O₃, SiO₂, MgO, BaO, MoO₃, V₂O₅, the mixed oxides thereof, and the like, and ZnO, TiO₂, and SnO₂ are preferably. Examples of the effective metal oxides containing a foreign atom include ZnO added with Al, In, or the like; SnO₂ added with Sb, Nb, a halogen atom, or the like; and TiO₂ added with Nb, Ta, or the like. The amount of these foreign atoms added is preferably in the range of 0.01 to 30 mol % and particularly preferably in the range of 0.1 to 10 mol %.

The metal oxide fine particles are preferably conductive and have a volume resistivity of 10⁷ Ωcm or less and particularly preferably 10⁵ Ωcm or less and 1 Ωcm or more. These oxides are described in JP-A Nos. 56-143431, 56-120519, and 58-62647. In addition, as described in JP-B No. 59-6235, conductive materials wherein the metal oxides above are supported by other crystalline metal oxide particles or fibers (e.g., titanium oxide) may also be used. The diameter of usable particles is preferably 10 µm or less, and more preferably 2 µm or less, as such particles are more stable and easier to use after dispersion. Particularly favorably, use of conductive particles having a particle size of 0.5 µm or less and 0.01 µm or more is effective in reducing light scattering as much as possible results in production of transparent photosensitive materials. If the conductive material is needle or fiber in shape, the length thereof is preferably 30 µm or less; the diameter, 2 µm or less; and particularly preferably the length is 25 µm or less; the diameter, 0.5 µm or less and 0.01 µm or more; and the length/diameter ratio, 3 or more and 10 or less.

If carbon black is used as the conductive substance, the SBET is preferably 50 to 500 m²/g and more preferably 70 to 400 m²/g. The DBP oil absorption is preferably 20 to 400 ml/ 100 g and more preferably 30 to 400 ml/100 g. The particle diameter of the carbon black is preferably 5 to 80 nm, more preferably 10 to 50 nm, and still more preferably 10 to 40 nm. The pH of the carbon black is preferably 2 to 10. The water content is preferably 0.1 to 10%, and the tap density, 0.1 to 1 g/ml.

Typical examples of carbon blacks include BLACK PEARLS 2000, 1300, 1000, 900, 800, 880, 700, and VULCAN XC-72, manufactured by Cabot; #3050B, #3150B, #3750B, #3950B, #950, #650B, #970B, #850B, MA-600, MA-230, #4000, and #4010, manufactured by Mitsubishi Chemical Corp.; CONDUCTEX SC-U, RAVEN 8800, 8000, 7000, 5750, 5250, 3500, 2100, 2000,1800, 1500, 1255, and 1250, manufactured by Columbia Carbon; Ketjen Black EC, manufactured by Akzo; and the like.

Carbon black may be used after surface treatment with a dispersant, after grafting with a resin, or after part of the surface being graphitized. Carbon black may be dispersed in a binder before it is added to a paint. These carbon blacks may be used in an amount of less than 50% by weight with respect to the inorganic powders above and of less than 40% with respect to the total conductive layer weight. These carbon blacks may be used alone of in combination. The carbon blacks for use in the invention may be found for example in "Carbon Black Handbook" (Carbon Black Association, Ed.).

Favorable examples of the conductive polymeric compounds include polyvinylbenzenesulfonic acid salts, polyvinylbenzyltrimethylammonium chloride, quaternary salt polymers described in U.S. Patent Nos. 4,108,802, 4,118,231, 4,126,467, and 4,137,217; polymer latexes described in U.S. Patent No. 4,070,189, OLS 2,830,767, JP-A Nos. 61-296352 and 61-62033, and the like.

The thickness of the conductive layer is preferably 10 to 700 nm, more preferably 20 to 400 nm, and still more preferably 30 to 100 nm. Physical Characteristics

The magnetic recording medium of the invention preferably has the physical characteristics as shown below.

In the magnetic recording medium of the invention, the magnetic layer preferably has a saturation magnetic flux density of 0.1 to 0.3 T and a coercivity of 95.5 kA/m (1200 Oe) to 955 kA/m (12000 Oe), more preferably of 159 to 478 kA/m (2000 to 6000 Oe). The distribution of the coercivity is preferably as narrow as possible. Its SFD is preferably 0.6 or less. The surface electric resistance of the magnetic recording medium is preferably 10¹⁰ ohms/ sq or less, more preferably 10⁹ ohms/sq or less.

In the case of a magnetic disk, the squareness ratio (two-dimensional random) should be from 0.55 to 0.67, preferably from 0.58 to 0.64, and the squareness ratio (three-dimensional random) should preferably be from 0.45 to 0.55. In the case of vertical orientation, the squareness in the vertical direction should be 0.6 or more, preferably 0.7 or more. When a demagnetizing field correction is performed, it should be 0.7 or more, preferably 0.8 or more in the vertical direction. In both two-dimensional random and three-dimensional random cases, the orientation ratio is preferably 0.8 or more. In the two-dimensional random case, the squareness ratio Br or Hc in the vertical direction is preferably from 0.1 to 0.5 times that in the in-plane direction.

In the case of a magnetic tape, the squareness ratio is generally 0.55 or more, preferably 0.7 or more. The friction coefficient of the magnetic recording medium of the invention with respect to a head should be 0.5 or less, preferably 0.3 or less, at a temperature of -10 to 40°C and a humidity of 0% to 95%. The surface specific resistance is preferably from 10⁴ to 10¹² ohms/ sq with respect to the magnetic layer surface. The potential is preferably from -500 V to +500 V. The elastic modulus of the magnetic layer at 0.5% elongation is preferably from 100 to 2000 kg/mm² (0.98 to 19.6 GPa) in each in-plane direction. The breaking strength is preferably from 10 to 70 kg/mm² (98 to 686 MPa). The elastic modulus of the magnetic recording medium is preferably from 100 to 1500 kg/mm² (0.98 to 14.7 GPa) in each in-plane direction. The residual elongation is preferably 0.5% or less. The thermal contraction rate at any temperature equal to or lower than 100°C is preferably 1% or less, more preferably 0.5% or less, still preferably 0.1% or less. The glass transition temperature of the magnetic layer (the maximum point of the loss elastic modulus by dynamic elastic measurement at 110 Hz) is preferably from 50 to 120°C. The glass transition temperature of the lower non-magnetic layer is preferably from 0 to 100°C.

The loss elastic modulus is preferably in the range from 1 × 10⁹ to 8 × 10¹⁰ µN/cm². The loss tangent is preferably 0.2 or less. If the loss tangent is too large, adhesion failure can easily occur. These thermal characteristics or mechanical characteristics preferably remain within 10% in each in-plane direction. The content of the solvent residue in the magnetic layer is preferably 100 mg/m² or less, more preferably 10 mg/m² or less. The porosity of the coating layer (with respect to both the non-magnetic layer and the magnetic layer) is preferably 30% by volume or less, more preferably 20% by volume or less. The porosity should preferably be small for high power, but in some cases, a certain value should be ensured depending on purpose. For example, in the case of a disk medium particularly for repeated use, a relatively high porosity may often be preferred for better running durability.

The center plane average surface roughness Ra of the magnetic layer should be 4.0 nm or less, preferably 3.8 nm or less, more preferably 3.5 nm or less, with respect to a 250 µm × 250 µm area measured with TOPO-3D manufactured by WYKO Corporation. Preferably, the magnetic layer is 0.5 µm or less in maximum height Rmax, 0.3 µm or less in ten-point average roughness Rz, 0.3 µm or less in center plane top height Rp, 0.3 µm or less in center plane valley depth Rv, from 20% to 80% in center plane area rate Sr, and from 5 µm to 300 µm in average wavelength λa. The surface projections of the magnetic layer are preferably provided as described above so that the electromagnetic transfer properties and the friction coefficient can be optimized. The projections can easily be controlled by filler control of the surface characteristics of the support, by the size and quantity of the powder added to the magnetic layer as described above, or by the shape of the surface of a calender roll. The curl is preferably within ±3 mm.

It will be understood that the physical characteristics may be changed depending on purpose in each of the non-magnetic layer and the magnetic layer, when the magnetic recording medium of the invention has both the non-magnetic layer and the magnetic layer. For instance, the elastic modulus of the magnetic layer may be set high so that running durability can be increased, while the elastic modulus of the non-magnetic layer may be set lower than that of the magnetic layer so that the contact of the magnetic recording medium with a head can be improved.

In the process of applying the magnetic particles to the support, any of various additives may be added, as needed, to the magnetic particle-containing liquid after the annealing, and the mixture may be applied to the support. In such a process, the concentration of the magnetic particles is preferably set at the desired value (from 0.001 to 0. 1 g/ml).

The method of the application to the support may be air doctor coating, blade coating, rod coating, extrusion coating, air knife coating, squeeze coating, immersion coating, reverse roll coating, transfer roll coating, gravure coating, kiss coating, cast coating, spray coating, spin coating, or the like.

As described above, the magnetic particles (magnetic particle-containing liquid) may be applied to the support and then subjected to drying at 40 to 200°C or the like to form the magnetic layer so that the magnetic recording medium of the invention is produced.

In the magnetic recording medium of the invention, the magnetic layer already contains ferro-magnetized particles, which do not have to be annealed at high temperature after applied to the support. Thus, the resulting magnetic recording medium can be free from magnetic particle aggregation, which would otherwise be caused by high temperature, and can have a highly dispersed state of the magnetic particles in the magnetic layer.

The thickness of the formed magnetic layer is preferably from 4 nm to 1 µm, more preferably from 4 nm to 100 nm, depending on the type of the magnetic recording medium to be applied.

The magnetic recording medium produced as shown above preferably has a center line average surface roughness of 0.1 to 5 nm, more preferably of 0.1 to 3 nm, with respect to a cutoff value of 0.25 mm. The surface with such very good flatness is preferred for a high-density magnetic recording medium.

The method of forming such a surface may include the step of performing a calender treatment after the formation of the magnetic layer. Alternatively, a varnish treatment may be performed.

The resulting magnetic recording medium may appropriately be punched by means of a punching machine or cut into the desired size using a cutting machine.

### EXAMPLES

The present invention is more specifically described by means of the examples below, which are not intended to limit the scope of the invention.

### Example 1

### Preparation of FePtCu Alloy Particles

The process as shown below was performed in high purity N₂ gas.

A reverse micelle solution (II) was prepared by adding an alkane solution of 10.8 g Aerosol OT (Wako Pure Chemical Industries, Ltd.) in 80 ml decane to an aqueous metal salt solution of 0.35 g iron triammonium trioxalate (Fe(NH₄)₃(C₂O₄)₃) (manufactured by Wako Pure Chemical Industries, Ltd.) and 0.35 g potassium platinate chloride (K₂PtCl₄) (manufactured by Wako Pure Chemical Industries, Ltd.) in 24 ml H₂O (from which oxygen gas had been removed) and mixing them.

A reverse micelle solution (I) was prepared by adding an alkane solution of 5.4 g Aerosol OT (trade name, manufactured by Wako Pure Chemical Industries, Ltd.) and 2 ml oleylamine (manufactured by TOKYO KASEI CO., LTD.) in 40 ml decane (manufactured by Wako Pure Chemical Industries, Ltd.) to an aqueous reducing agent solution of 0.57 g NaBH₄ (manufactured by Wako Pure Chemical Industries, Ltd.) in 12 ml H₂O (from which oxygen gas had been removed) and mixing them.

A reverse micelle solution (II') was prepared by adding an alkane solution of 2.7 g Aerosol OT (trade name, manufactured by Wako Pure Chemical Industries, Ltd.) in 20 ml decane to an aqueous metal salt solution of 0.07 g cupper chloride (CuCl₂·6H₂O) (manufactured by Wako Pure Chemical Industries, Ltd.) in 2 ml H₂O (from which oxygen gas had been removed) and mixing them.

A reverse micelle solution (I') was prepared by adding an alkane solution of 5.4 g Aerosol OT (trade name, manufactured by Wako Pure Chemical Industries, Ltd.) in 40 ml decane to an aqueous reducing agent solution of 0.88 g ascorbic acid (manufactured by Wako Pure Chemical Industries, Ltd.) in 12 ml H₂O (from which oxygen gas had been removed) and mixing them.

While the reverse micelle solution (II) was stirred at a high speed at 22°C in Omni-Mixer (trade name, manufactured by Yamato Scientific Co., Ltd.), the reverse micelle solution (I) was instantly added thereto. After three minutes, the reverse micelle solution (II') was added thereto at a rate of about 2.4 ml/minute over about 10 minutes. Five minutes after the completion of the addition, the stirring was changed to magnetic stirrer stirring. After the temperature was raised to 40°C, the reverse micelle solution (I') was added, and the resulting mixture was aged for 120 minutes. After the temperature was cooled to room temperature, 2 ml of oleic acid (manufactured by Wako Pure Chemical Industries, Ltd.) was added and mixed, and the resulting mixture was taken out into the air. In order to destroy the reverse micelle, a mixture of 200 ml H₂O and 200 ml methanol was added, so that the micelle was separated into an aqueous phase and an oil phase. In the resulting state, the metal nanoparticles ware dispersed in the oil phase. The oil phase was washed five times with a mixture of 600 ml H₂O and 200 ml methanol. Thereafter, 1300 ml of methanol was added so that the metal nanoparticles were allowed to flocculate and precipitate. The supernatant was removed, and 20 ml of heptane (manufactured by Wako Pure Chemical Industries, Ltd.) was added to form a dispersion again. In addition, precipitation by the addition of 100 ml methanol and dispersion with 20 ml heptane were performed twice. Finally, 5 ml of octane (manufactured by Wako Pure Chemical Industries, Ltd.) was added, so that a FeCuPt alloy particle-containing liquid was prepared (the step of preparing alloy particles).

### Oxidation Treatment Step

The prepared alloy particle-containing liquid was concentrated by vacuum degassing to have an alloy particle content of 4% by mass. After the concentration, the atmosphere was returned to the normal pressure, and oxygen gas was supplied into the alloy particle-containing liquid to oxidize the alloy particles. The oxygen gas supply temperature and time were 25°C and one minute, respectively.

### Annealing Step

The oxidized alloy particle-containing liquid (10 ml), which contained 0.4 mg of the alloy particles, was subjected to a reflux treatment at 360°C for 90 minutes in the solvent (100 ml) as shown in Table 1 below (the annealing) to form magnetic particles. Thereafter, centrifugation was performed at 5000 rpm to separate the magnetic particles.

### Example 2

Magnetic particles were prepared using the process of Example 1 except that trioctylamine was used as the solvent in the annealing in place of triethanolamine.

### Example 3

Magnetic particles were prepared using the process of Example 1 except that a 1:1 mixed solution (volume ratio) of tetradecane and ethylene glycol was used as the solvent in annealing in place of triethanolamine and the annealing temperature during the reflux treatment was 250°C.

### Example 4

Magnetic particles were prepared using the process of Example 1 except that the oxidation treatment was eliminated.

### Example 5

Magnetic particles were prepared using the process of Example 2 except that the oxidation treatment was eliminated.

### Example 6

Magnetic particles were prepared using the process of Example 1 except that reverse micelle solutions (I') and (II') were not added.

### Example 7

Magnetic particles were prepared using the process of Example 2 except that reverse micelle solutions (I') and (II') were not added.

### Comparative Example 1

Magnetic particles were prepared using the process of Example 1 except that the annealing treatment was eliminated.

### Comparative Example 2

Magnetic particles were prepared using the process of Example 6 except that the annealing treatment was eliminated.

Magnetic characteristic evaluation and crystal structure analysis were performed on the magnetic particles prepared in Examples 1 and 7 and Comparative Example 1 and 2.

The magnetic characteristic evaluation (measurement of coercivity) was made using a high sensitivity magnetization vector meter manufactured by TOEI INDUSTRY CO., LTD. and a data processor manufactured by the same company under an applied magnetic field of 790 kA/m (10 kOe).

The crystal structure analysis was performed using an X-ray diffractometer (manufactured by Rigaku Corporation) at a tube voltage of 50 kV and a tube current of 300 mA with a CuKα ray from the radiation source by a powder method using a goniometer. The results are shown in Table 1 below.

**Table 1**

| | Magnetic particle composition | Annealing condition | Solvent used in annealing | Hc (Oe) | Crystal structure |
|---|---|---|---|---|---|
| Example 1 | FePtCu | 360°C, 90 min | Triethanolamine | 3000 (237kA/m) | Tetragonal |
| Example 2 | FePtCu | 360°C, 90 min | Trioctylamine | 2900 (229.1 kA/m) | Tetragonal |
| Example 3 | FePtCu | 250°C, 90 min | Tetradecane: ethylene glycol (1:1) | 1500 (118.5kA/m) | Tetragonal |
| Example 4 | FePtCu | 360°C, 90 min | Triethanolamine | 1500 (134.3kA/m) | Tetragonal |
| Example 5 | FePtCu | 360°C, 90 min | Trioctylamine | 1200 (118.5kA/m) | Tetragonal |
| Example 6 | FePt | 360°C, 90 min | Triethanolamine | 1700 (134.3kA/m) | Tetragonal |
| Example 7 | FePt | 360°C, 90 min | Trioctylamine | 1500 (118.5kA/m) | Tetragonal |
| Comparative Example 1 | FePtCu | - | - | 100 (7.9kA/m) | Cubic |
| Comparative Example 2 | FePt | - | - | 90 (7.11 kA/m) | Cubic |

Table 1 indicates that the magnetic particles of Example 1 to 7 with the specific annealing have a high coercivity (Hc), while those of Comparative Example 1 or 2 have a disordered cubic phase and a low coercivity.

This suggests that the phase of the alloy particles should efficiently be transformed by the annealing so that ferromagnetic particles should be formed. It was confirmed that more high coercivity was obtained by subjecting to oxidation treatment and by adding third element (Cu).

The magnetic particles prepared in Example 1 were then applied to Apical (material: polyimide, thickness: 1 mm) manufactured by Kaneka Corporation and dried at 150°C to form a magnetic layer, so that a magnetic recording medium was produced. In the magnetic layer of the magnetic recording medium, the magnetic particles maintained a highly dispersed state without aggregating with each other. It has been found from the result that the magnetic particles of the invention have a good suitability for application.

### Example 8

### Preparation of FePt Alloy Particles

The process as shown below was performed in high purity N₂ gas.

A reverse micelle solution (I) was prepared by adding an alkane solution of 16 g Aerosol OT (trade name, manufactured by Wako Pure Chemical Industries, Ltd.) in 120 ml decane (manufactured by Wako Pure Chemical Industries, Ltd.) to an aqueous reducing agent solution of 0.57 g NaBH₄ (manufactured by Wako Pure Chemical Industries, Ltd.) in 24 ml H₂O (from which oxygen gas had been removed) and mixing them.

A reverse micelle solution (II) was prepared by adding an alkane solution of 16 g Aerosol OT (Wako Pure Chemical Industries, Ltd.) in 120 ml decane to an aqueous metal salt solution of 0.46 g iron triammonium trioxalate (Fe(NH₄)₃(C₂O₄)₃) (manufactured by Wako Pure Chemical Industries, Ltd.) and 0.38 g potassium platinate chloride (K₂PtCl₄) (manufactured by Wako Pure Chemical Industries, Ltd.) in 24 ml H₂O (from which oxygen gas had been removed) and mixing them.

A reverse micelle solution (I') was prepared by adding an alkane solution of 4 g Aerosol OT (trade name, manufactured by Wako Pure Chemical Industries, Ltd.) and 3 ml oleylamine (TOKYO KASEI KOGYO Co., Ltd.) in 30 ml decane (manufactured by Wako Pure Chemical Industries, Ltd.) to an aqueous reducing agent solution of 0.44 g ascorbic acid (manufactured by Wako Pure Chemical Industries, Ltd.) in 6 ml H₂O (from which oxygen gas had been removed) and mixing them.

While the reverse micelle solution (I) was stirred at a high speed at 22°C in Omni-Mixer (trade name, manufactured by Yamato Scientific Co., Ltd.), the reverse micelle solution (II) was instantly added thereto. After four minutes, the reverse micelle solution (I') was also instantly added thereto. Four minutes after the completion of the addition, the stirring was changed to magnetic stirrer stirring. After the temperature was raised to 40°C, the resulting mixture was aged for 120 minutes. After the temperature was cooled to room temperature, 3 ml of oleic acid (manufactured by Wako Pure Chemical Industries, Ltd.) was added and mixed, and the resulting mixture was taken out into the air. In order to destroy the reverse micelle, a mixture of 450 ml H₂O and 450 ml methanol was added, so that the micelle was separated into an aqueous phase and an oil phase. In the resulting state, the metal nanoparticles ware dispersed in the oil phase. The oil phase was washed once with a mixture of 900 ml H₂O and 300 ml methanol. Thereafter, 2000 ml of methanol was added so that the metal nanoparticles were allowed to flocculate and precipitate. The supernatant was removed, and 40 ml of heptane (manufactured by Wako Pure Chemical Industries, Ltd.) was added to form a dispersion again. In addition, precipitation by the addition of 200 ml methanol and dispersion with 40 ml heptane were performed twice. Finally, 10 ml of heptane (manufactured by Wako Pure Chemical Industries, Ltd.) was added, so that a FePt alloy particle-containing liquid was prepared. Their number average particle diameter was 5.1 nm (with a coefficient of variation of 7.6%). The composition Fe/Pt was 54/46 at.%.

### Oxidation Treatment Step

Oxygen gas was supplied to the FePt alloy particle-containing liquid, which was adjusted so as to have an alloy particle content of 4% by mass. The oxygen gas supply temperature and time were 25°C and one minute, respectively.

### Annealing Step

To 5 ml of the oxidized FePt alloy particle-containing liquid with an alloy particle content of 4% by mass were added 0.5 ml of oleylamine and 0.5 ml of oleic acid, and then 5 ml of ethylene glycol. The mixture was injected into a pressure metal vessel. After the vessel was sealed, the mixture was kept under a pressure of 20 MPa at 350°C for three hours (the annealing step). The mixture was cooled to room temperature, purified and dispersed again in heptane (Sample 1).

### Example 9

### Preparation of FePtCu Alloy Particles

The process as shown below was performed in high purity N₂ gas.

A reverse micelle solution (I) was prepared by adding an alkane solution of 16 g Aerosol OT (trade name, manufactured by Wako Pure Chemical Industries, Ltd.) in 120 ml decane (manufactured by Wako Pure Chemical Industries, Ltd.) to an aqueous reducing agent solution of 0.57 g NaBH₄ (manufactured by Wako Pure Chemical Industries, Ltd.) in 18 ml H₂O (from which oxygen gas had been removed) and mixing them.

A reverse micelle solution (II) was prepared by adding an alkane solution of 16 g Aerosol OT (Wako Pure Chemical Industries, Ltd.) in 120 ml decane to an aqueous metal salt solution of 0.43 g iron triammonium trioxalate (Fe(NH₄)₃(C₂O₄)₃) (manufactured by Wako Pure Chemical Industries, Ltd.) and 0.25 g potassium platinate chloride (K₂PtCl₄) (manufactured by Wako Pure Chemical Industries, Ltd.) in 18 ml H₂O (from which oxygen gas had been removed) and mixing them.

A reverse micelle solution (II') was prepared by adding an alkane solution of 4 g Aerosol OT (trade name, manufactured by Wako Pure Chemical Industries, Ltd.) in 30 ml decane to an aqueous metal salt solution of 0.11 g cupper chloride (CuCl₂·6H₂O) (manufactured by Wako Pure Chemical Industries, Ltd.) in 4.5 ml H₂O (from which oxygen gas had been removed) and mixing them.

A reverse micelle solution (I') was prepared by adding an alkane solution of 8 g Aerosol OT (trade name, manufactured by Wako Pure Chemical Industries, Ltd.) and 3 ml oleylamine (TOKYO KASEI KOGYO Co., Ltd.) in 60 ml decane (manufactured by Wako Pure Chemical Industries, Ltd.) to an aqueous reducing agent solution of 0.88 g ascorbic acid (manufactured by Wako Pure Chemical Industries, Ltd.) and 0.06 g Bicine (N,N-bis(2-hydroxyethyl)glycine, manufactured by DOJINDO LABORATORIES) in 9 ml H₂O (from which oxygen gas had been removed) and mixing them.

While the reverse micelle solution (I) was stirred at a high speed at 22°C in Omni-Mixer (trade name, manufactured by Yamato Scientific Co., Ltd.), the reverse micelle solution (II) was instantly added thereto. After three minutes, the reverse micelle solution (I') was also instantly added thereto. After two minutes, the reverse micelle solution (II') was also added. Five minutes after the addition, the stirring was changed to magnetic stirrer stirring. After the temperature was raised to 50°C, the resulting mixture was aged for 120 minutes. After the temperature was cooled to room temperature, 3 ml of oleic acid (manufactured by Wako Pure Chemical Industries, Ltd.) was added and mixed, and the resulting mixture was taken out into the air. In order to destroy the reverse micelle, a mixture of 450 ml H₂O and 450 ml methanol was added, so that the micelle was separated into an aqueous phase and an oil phase. In the resulting state, the metal nanoparticles ware dispersed in the oil phase. The oil phase was washed once with a mixture of 900 ml H₂O and 300 ml methanol. Thereafter, 2500 ml of methanol was added so that the metal nanoparticles were allowed to flocculate and precipitate. The supernatant was removed, and 40 ml of heptane (manufactured by Wako Pure Chemical Industries, Ltd.) was added to form a dispersion again. In addition, precipitation by the addition of 200 ml methanol and dispersion with 40 ml heptane were performed twice. Finally, 10 ml of heptane (manufactured by Wako Pure Chemical Industries, Ltd.) was added, so that a FeCuPt alloy particle-containing liquid was prepared. Their number average particle diameter was 4.6 nm (with a coefficient of variation of 8.1%). The composition Fe/Pt/Cu was 41/40/19 at.%.

### Oxidation Treatment Step

Oxygen gas was supplied to the alloy particle-containing liquid, which was adjusted so as to have an alloy particle content of 4% by mass. The oxygen gas supply temperature and time were 25°C and one minute, respectively.

### Annealing Step

To 5 ml of the oxidized FeCuPt alloy particle-containing liquid with an alloy particle content of 4% by mass were added 0.5 ml of oleylamine and 0.5 ml of oleic acid, and then 5 ml of ethylene glycol. The mixture was injected into a pressure metal vessel. After the vessel was sealed, the mixture was kept under a pressure of 20 MPa at 350°C for three hours (the annealing step). The mixture was cooled to room temperature, purified and dispersed again in heptane (Sample 2).

### Example 10

A dispersion of magnetic particles (each of Samples 3 to 6) was prepared using the process of Example 8 except that a different solvent was used in the annealing as shown in Table 2.

### Example 11

A dispersion of magnetic particles (each of Samples 7 to 10) was prepared using the process of Example 9 except that a different solvent was used in the annealing as shown in Table 2.

### Comparative Example 3

A dispersion of magnetic particles (Sample 11) was prepared using the process of Example 8 except that no annealing was performed.

### Comparative Example 4

A dispersion of magnetic particles (Sample 12) was prepared using the process of Example 9 except that no annealing was performed.

Magnetic characteristic evaluation and crystal structure analysis were performed on the magnetic particles prepared in Examples 8 to 11 and Comparative Examples 3 and 4.

The magnetic characteristic evaluation (measurement of coercivity) was made using a high sensitivity magnetization vector meter manufactured by TOEI INDUSTRY CO., LTD. and a data processor manufactured by the same company under an applied magnetic field of 790 kA/m (10 kOe).

The crystal structure analysis was performed using an X-ray diffractometer (manufactured by Rigaku Corporation) at a tube voltage of 50 kV and a tube current of 300 mA with a CuKα ray from the radiation source by a powder method using a goniometer. The results are shown in Table 2.

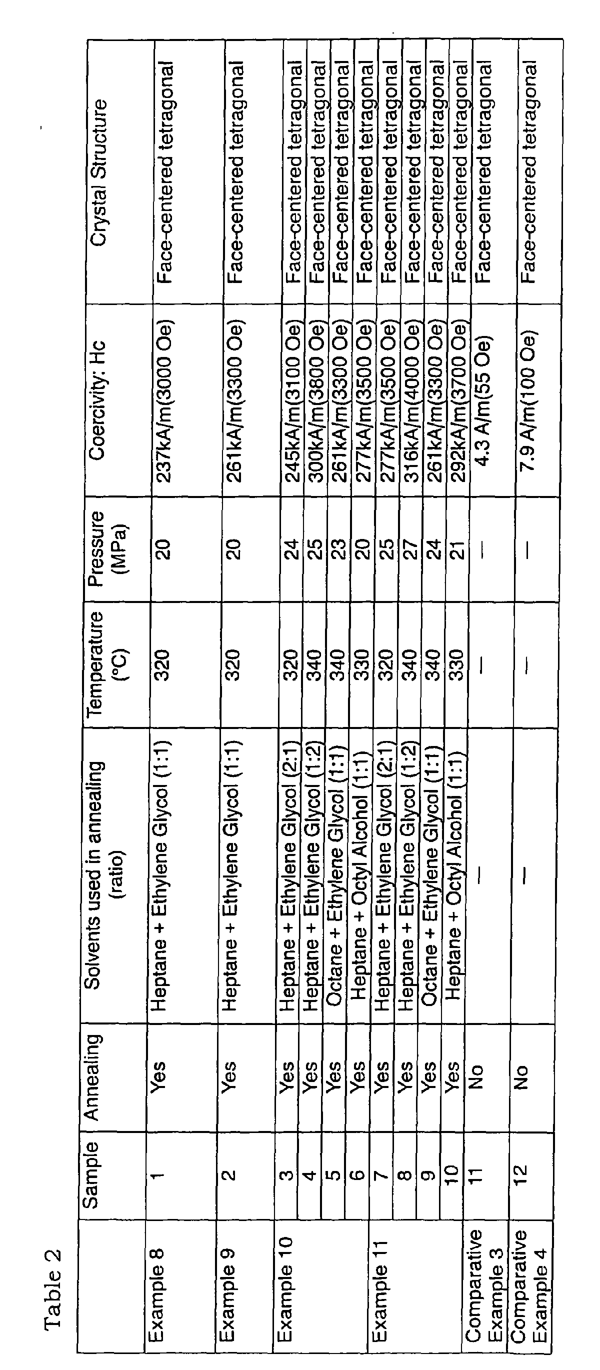

Table 2 indicates that the magnetic particles of Examples 8 to 11 with the specific annealing have a face-centered tetragonal ordered phase and show a high coercivity (Hc), while those of Comparative Examples 3 and 4 have a face-centered cubic disordered phase and a low coercivity.

This suggests that the phase of the alloy particles should efficiently be transformed by the annealing according to the invention so that ferromagnetic particles should be formed.

The magnetic particles prepared in each of Examples 8 to 11 were then applied to Upilex (material: polyimide, thickness: 75 µm) manufactured by UBE INDUSTRIES LTD. and dried at 200°C to form a magnetic layer, so that a magnetic recording medium was produced. In the magnetic layer of the magnetic recording medium, the magnetic particles maintained a highly dispersed state without aggregating with each other. It has been found from the result that the magnetic particles of the invention have a good suitability for application.

### (Examples 12 and 13)

The magnetic-particle dispersion prepared in Example 3 was evaporated under vacuum until the content of the magnetic particles becomes 4% by weight, to give magnetic-particle dispersion A. Subsequently, a solution of Torayfil R910 manufactured by Toray Industries in decane at a concentration of 1% by weight was added as a matrix agent in an amount of 54 µl with respect to 1 ml of magnetic-particle dispersion A, and the resulting solution was stirred and then filtered in a clean room, to give magnetic-particle dispersion B.

**Table 3**

| | Support |
|---|---|
| Example 12 | Polyethylene terephthalate |
| Example 13 | Polyethylene naphthalate |

### (Protective layer)

A carbon protective layer was formed on each magnetic layer surface by using a 400-W Rf sputter. The thickness thereof was 10 nm.

### (Varnish treatment)

Varnish treatment was conducted by using the following varnish head and rotating the media at 7,200 rpm.

### - Specification for varnish head (Glide Signus) -

(1) Slider: 24 pads
(2) Load: 5 g
(3) Suspension: Type 2030
(4) Z-height: 29 mil (0.7366 mm)

### (Lubricant layer)

The surface of the medium after the varnish treatment above was washed with Frorinart FC72 (manufactured by Sumitomo 3M) and dried. A solution of Fomblin Z Sol (manufactured by Ausimont) in a solvent (Frorinart FC72) at a concentration of 1% by weight was prepared and applied onto the magnetic recording medium by a dip coater while withdrawing the medium at a speed of 10 mm/ min.

The magnetic parametric performance of the resulting medium was evaluated by using the Spin Stand LS90 manufactured by Kyodo Electronics and regenerating the record on the media at the 25-mm position of the medium radius using the ring head. The write current was 10 mA.

It was investigated whether it was possible to evaluate the magnetic parametric performance of the recording medium rotating at a speed of 7200 rpm, and all magnetic recording media are confirmed to be basically capable of regenerating record.

### Examples 14 and 15

The following materials were blended with the magnetic-particle dispersion A prepared in Example 12, to give a paint for magnetic layers.
- Vinyl chloride copolymer MR110 (manufactured by Zeon Corp.): 12 parts by weight
- Polyurethane resin UR8200 (manufactured by Toyobo): 3 parts by weight
- α-Alumina HIT55 (manufactured by Sumitomo Chemical): 2 parts by weight
- Carbon black #55 (manufactured by Asahi carbon): 1 part by weight
- Butyl stearate: 1 part by weight
- Stearic acid: 5 parts by weight
- Methylethylketone: 100 parts by weight
- Cyclohexanone: 20 parts by weight
- Toluene: 60 parts by weight

The blending amounts above are amounts with respect to 100 parts by weight of magnetic particles.

Separately, a paint for nonmagnetic layers was prepared by blending the following materials:

### - Nonmagnetic powder (TiO₂; crystal system: rutile): 80 parts by weight

The average primary particle diameter of the nonmagnetic powders above was 0.035 µm; the specific surface area by BET method, 40 m²/g; TiO₂ content, 90% or more; pH, 7; DBP oil absorption, 27 to 38 g/ 100g; and surface finishing agent (Al₂O₃) content, 8% by mass.

### - Carbon black: 20 parts by mass

The trade name is Conductex SC-U (manufactured by Columbia Carbon).
- Vinyl chloride copolymer MRI10 (manufactured by Zeon Corp.): 12 parts by mass
- Polyurethane resin: UR8200 (manufactured by Toyobo): 5 parts by mass
- Phenylphosphonic acid: 4 parts by mass
- Butyl stearate: 1 part by mass
- Stearic acid: 3 parts by mass

Three parts by mass of polyisocyanate and additionally 40 parts by mass of cyclohexanone were added to each of the paints for magnetic and nonmagnetic layers above, and the mixture was filtered through a filter having an average pore diameter of 1 µm, to give a coating liquid for magnetic layers or a coating liquid for nonmagnetic layers.

After application of a paint for nonmagnetic layers onto a support (aramide resin) having a thickness of 4.5 µm, a paint for magnetic layers was applied in such an amount that the thickness of the magnetic layer after drying becomes 0.10 µm, and the magnetic layer was oriented by using cobalt magnets having a magnetic force of 6000 G (0.6 T) and a solenoid having a magnetic force of 6000 G (0.6 T) while the magnetic coated layer is still wet. After dried, the magnetic layer was calendered in a 7-stage calendering machine having only metal rolls at a temperature of 85°C and a traveling speed of 200 m/min, to form a magnetic layer. Then, on the face of the support where the magnetic layer is not formed a back layer having a thickness shown in Table 4 below was formed by coating, to give a magnetic recording medium (magnetic tape).

### Materials used for the back layer are as follows:

- Carbon black (average particle size: 17 µm): 100 parts
- Calcium carbonate (average particle size: 40 µm): 80 parts
- α-Alumina (average particle size: 200 µm): 5 parts

The materials above were dispersed in a nitrocelllulose resin, polyurethane resin, or polyisocyanate, and the resulting dispersion was coated. Typically, the recording medium was slit into tapes of 3.8 mm in width, and the slit tape was placed in a tape-cleaning machine equipped with slit tape-supplying and winding devices in such a manner that the nonwoven fabric and the razor blade thereof are in contact with the magnetic face, and the surface of the magnetic layer was cleaned therein, to give a tape sample (magnetic recording medium).

### [Reference Example]

A magnetic recording medium was prepared using the process of Example 10 except that the back layer was not formed.

The magnetic property and the particle diameter of the magnetic particles in magnetic layer of the magnetic recording media prepared in Examples 14 and 15 and Reference Example were determined.
The magnetic property was determined at an applied magnetic field of 15 kOe by using a high-sensitivity magnetization vector analyzer manufactured by Toei Industry and a data processing apparatus by the same company.

Alternatively, the particle diameter was determined by using a transmission electron microscope (TEM; acceleration voltage: 300 kV) manufactured by Hitachi.

The coercivities (Hc) of the magnetic recording media were all 1200 Oe (118.5 kA/m) or more.

The particle diameters were all 5 nm.

With respect to the magnetic recording media prepared in Examples 14 and 15 and Reference Example, ash adhesion tests (evaluation test concerning whether cigarette ash adheres to a magnetic recording medium when the medium is brought closer to collected cigarette ash) were performed. The results are summarized in Table 4 below.

In addition, the surface resistances thereof (measuring environment: 23°C and 70% RH) were determined by using a digital surface resistance meter TR-8611A (manufactured by Takeda Riken Co. Ltd.). The results are summarized in Table 4 below.

Further, the running durability was evaluated as follows: Each of the magnetic recording media of Examples 14 and 15 and Reference Example was rubbed 500 times under the 10 g load at a lap angle of 180° and a speed of 18 mm/min by using a SUS 420J sliding rod having a diameter of φ 4 mm and keeping the sliding rod in contact with the surface of back layer under an environment of 23°C and 50% RH. The surface of the back layer was visually observed by using a 200X optical microscope and the scratches there were counted. The results are summarized in Table 4 below.

**Table 4**

| | Thickness of backcoat layer (µm) | Surface resistance (Ω/sq) | Ash adhesion | Scratch |
|---|---|---|---|---|
| Example 14 | 0.6 | 5 × 10⁶ | None | None |
| Example 15 | 0.3 | 1 × 10⁷ | None | None |
| Reference Example | None | 1 × 10¹¹ | Many | Many |

The coercivities of the magnetic recording media of Examples 14 and 15 and Reference Example were favorable, as the magnetic particles of the invention were used in the magnetic layers thereof. In addition, as the magnetic recording media of Examples 14 and 15 have a back layer, the ash adhesion and the scratch generation thereof were suppressed, and the surface resistance was also favorable.

### Example 16

Magnetic particles were prepared using the process of Example 1, and further processed in the following steps.

### (Preparation of coating liquids)

The magnetic particle-containing liquid prepared was evaporated under vacuum until the content of the magnetic particles becomes 20% by mass. Then, toluene was added to give a mixed solution containing the magnetic particles at 10% by mass. Separately, a urethane resin was dissolved in cyclohexanone, to prepare a solution containing the urethane resin at a content of 1% by mass. Then, 108.8 µl of this solution was added to 1 ml of the mixed solution above. The liquid was a stable dispersion and used as a coating liquid. The contents of the magnetic particles, binder, polar solvent, and nonpolar solvent in the coating liquid were respectively 9%, 81%, 1%, and 9% by mass.

### (Coating step)

A magnetic layer was formed by applying the coating liquid on a glass support (thickness: 1 mm) by a spin coater and drying the coated layer at 25°C (room temperature). The thickness of the magnetic layer was 50 nm then. After application, the layer was dried at 150°C for 5 minutes.

A carbon protective layer (10 nm) was formed on the magnetic layer surface by using a 400-W Rf sputter, to give a magnetic recording medium.

### (Varnish treatment)

Varnish treatment was conducted by using the following varnish head and rotating a medium at 7200 rpm.

### - Specification for varnish head (Glide Signus):

Slider: 24 pads; load: 5 g; suspension: type 2030; and Z-height: 29 mil (0.7366 mm).

### (Lubricant layer)

The surface of the medium after the varnish treatment above was washed with Frorinart FC72 (manufactured by Sumitomo 3M) and dried.

A solution of Fomblin Z Sol (manufactured by Ausimont) in a solvent (Frorinart FC72) at a concentration of 1% by mass was prepared and applied onto the magnetic recording medium by a dip coater while withdrawing the medium at a speed of 10 mm/min.

### Example 17

A magnetic recording medium was prepared using the process of Example 16 except that trioctylamine was used as the organic solvent in annealing in place of triethanolamine.

### Example 18

A magnetic recording medium was prepared using the process of Example 16 except that a 1:1 (weight ratio) mixed solution of tetradecane and ethylene glycol was used as the organic solvent in annealing in place of triethanolamine, and reflux temperature sets 250°C.

### Comparative Example 5

A magnetic recording medium was prepared using the process of Example 16 except that the annealing treatment was eliminated and no nonpolar solvent was used. Observation of the magnetic layer of the magnetic recording medium after preparation revealed local aggregation of the magnetic layer.

The magnetic property and the crystal structure of the magnetic particles prepared in Examples 16 to 18 and Comparative Example 5 were determined.

The magnetic property was determined at an applied magnetic field of 790 kA/m (10 kOe) by using a high-sensitivity magnetization vector analyzer manufactured by Toei Industry and a data processing apparatus by the same company.

Analysis of crystal structure was performed by the powder method using a goniometer in an X-ray diffractometer manufactured by Rigaku Corp. and CuKα ray as the X-ray source at a tube voltage of 50 kV and a tube current of 300 mA. The results are summarized in the following Table 5.

**Table 5**

| | Oxidation treatment | Annealing treatment | Solvent | Hc (Oe) | Crystal structure |
|---|---|---|---|---|---|
| Example 16 | Yes | 360°C 90min | Triethanolamine | 3000 [237kA/m] | Tetragonal |
| Example 17 | Yes | 360°C 90min | Trioctylamine | 2900 [229.1 kA/m] | Tetragonal |
| Example 18 | Yes | 250°C 90min | Tetradecane and ethylene glycol | 1500 [118.5 kA/m] | Tetragonal |
| Comparative Example 5 | Yes | 250°C 90min | - | 100 [7.9 kA/m] | Cubic |

As apparent from Table 5, while the magnetic particles of Comparative Example 5 showed a low coercivity (Hc) due to its irregular cubic phase, the magnetic particles of Examples 16 to 18, which were subjected to certain annealing treatment, had a high coercivity.

It seems that phase transformation of the alloy particles was caused efficiently by the annealing above and the particles were converted to ferromagnetic magnetic particles.

The magnetic parametric performance of the magnetic recording media of Examples 1 to 3 after application of a lubricant layer was evaluated. The magnetic parametric performance of the resulting medium was evaluated by using the Spin Stand LS90 manufactured by Kyodo Electronics and regenerating the record on the media at the 25-mm position of the medium radius using the ring head. The write current was 10 mA. It was investigated whether it is possible to evaluate the magnetic parametric performance at a recording medium rotational speed of 7200 rpm. As a result, all magnetic recording media are confirmed to be basically capable of regenerating record.

### Example 19

A magnetic recording medium was prepared using the process of Example 16 except that the support was changed to a polyethylene naphthalate support (thickness: 53 µm), and after evaluation of the magnetic parametric performance, the magnetic recording medium was found to be basically capable of regenerating record.

## Claims

1. Magnetic particles having a CuAu- or Cu₃Au-type ferromagnetic ordered alloy phase, wherein the surface of the magnetic particles is in contact with an organic substance.

2. A method of producing magnetic particles having a CuAu- or Cu₃Au-type ferromagnetic ordered alloy phase, comprising: preparing alloy particles capable of forming a CuAu- or Cu₃Au-type ferromagnetic ordered alloy phase; and annealing the alloy particles in a solvent.

3. A method of producing magnetic particles according to claim 2, wherein the annealing is performed at a high temperature of 150 to 350°C under a pressure of 1 to 50 MPa.

4. A method of producing magnetic particles according to claim 2 or 3, wherein the annealing is performed in a mixed solvent of an alkane and an alcohol.

5. A method of producing magnetic particles according to any one of claims of 2 to 4, wherein the magnetic particles have a number average particle diameter of 1 nm to 30 nm after the annealing.

6. A method of producing magnetic particles according to any one of claims 2 to 5, wherein the alloy particles are prepared by a liquid phase method.

7. A method of producing magnetic particles according to any one of claims 2 to 6, wherein the alloy particles are prepared by a reverse micellization method.

8. A method of producing magnetic particles according to any one of claims 2 to 7, further comprising subjecting the alloy particles to an oxidation treatment before the alloy particles are annealed in the solvent.

9. Magnetic particles having a CuAu- or Cu₃Au-type ferromagnetic ordered alloy phase, wherein the particles are produced by preparing alloy particles capable of forming a CuAu- or Cu₃Au-type ferromagnetic ordered alloy phase, and annealing the alloy particles in a solvent.

10. Magnetic particles according to 9, wherein the annealing is performed at a high temperature of 150 to 350°C under a pressure of 1 to 50 MPa.

11. Magnetic particles according to claim 9 or 10, wherein the annealing is performed in a mixed solvent of an alkane and an alcohol.

12. Magnetic particles according to any one of claims 9 to 11, wherein the magnetic particles have a number average particle diameter of 1 nm to 30 nm after the annealing.

13. Magnetic particles according to any one of claims 9 to 12, wherein the alloy particles are prepared by a liquid phase method.

14. Magnetic particles according to any one of claims 9 to 13, wherein the alloy particles are prepared by a reverse micellization method.

15. Magnetic particles according to any one of claims 9 to 14, wherein the particles are produced by subjecting the alloy particles to an oxidation treatment before the alloy particles are annealed in the solvent.

16. Mgnetic particles according to any one of claim 9 to 15, further comprising a third element.

17. A magnetic recording medium comprising a support and a magnetic layer provided on the support, wherein the magnetic layer contains magnetic particles having a CuAu- or Cu₃Au-type ferromagnetic ordered alloy phase, the surface of the magnetic particles being in contact with an organic substance.

18. A magnetic recording medium according to claim 17, wherein the support is an organic support.

19. A magnetic recording medium according to claim 17 or 18, further comprising at least one conductive layer.

20. A magnetic recording medium according to any one of claims 17 to 19, wherein a back layer is formed on a side of the support on which the magnetic layer is not formed.

21. A magnetic recording medium comprising a support and a magnetic layer which is provided on the support and contains magnetic particles having a CuAu- or Cu₃Au-type ferromagnetic ordered alloy phase, wherein
the magnetic layer is formed by preparing alloy particles capable of forming a CuAu- or Cu₃Au-type ferromagnetic ordered alloy phase, then converting the alloy particles to magnetic particles by means of annealing the alloy particles while contained in a solvent, and applying a coating liquid containing the magnetic particles, a binder, a polar solvent and a nonpolar solvent on the support.

22. A magnetic recording medium according to claim 21, wherein a nonmagnetic layer is provided between the support and the magnetic layer.

23. A magnetic recording medium comprising a support and a magnetic layer which is provided on the support and contains magnetic particles capable of forming a CuAu- or Cu₃Au-type ferromagnetic ordered alloy phase, the magnetic layer further comprising a binder, a polar solvent, and a nonpolar solvent.

24. A magnetic recording medium according to claim 23, wherein a nonmagnetic layer is provided between the support and the magnetic layer.
